# EUROPÄISCHE PATENTANMELDUNG

(11) **EP 1 844 654 A1**
(43) Veröffentlichungstag der Anmeldung: **17.10.2007**
(21) Anmeldenummer: 06006505.9
(22) Anmeldetag: 29.03.2006
(51) Int. Cl.: A01N 25/30, A01N 51/00, A01N 47/36, A01P 13/00, A01P 7/00, A01P 3/00

(54) **Penetrationsförderer für agrochemische Wirkstoffe**

(71) Anmelder: Bayer CropScience GmbH, 65929 Frankfurt (DE)
(72) Erfinder: Krause, Hans-Peter, 65719 Hofheim (DE); Schnabel, Gerhard, 63820 Elsenfeld (DE); Süssmann, Rainer, 65549 Limburg (DE); Baur, Peter, 56938 Schondorf (DE); Bickers, Udo, 49835 Wietmarschen (DE); Hesse, Kerstin, 53121 Bonn (DE)

(57) **Zusammenfassung**

Penetrationsförderer für agrochemische Wirkstoffe Polyalkylenoxidderivate der Formel (I),

R^{a}-(CO)ₐ-[O]_{c}-A-(CO)_{b}-R^{b} (I)

wobei die Symbole und Indizes folgende Bedeutungen haben:
R^{a}
ist ein C₈-C₃₀-Kohlenwasserstoff-Rest;
R^{b}
ist ein C₈-C₃₀-Kohlenwasserstoff-Rest, wie C₈-C₃₀-Alkyl, C₈-C₃₀-Alkenyl, C₈-C₃₀-Alkinyl;
a
ist 0 oder 1;
b
ist 0 oder 1;
c
ist 0 oder 1 und
A
ist eine oder mehrere Alkylenoxideinheiten,
eignen sich zur Förderung der Penetration von agrochemischen Wirkstoffen in Pflanzen.

## Beschreibung

Die Erfindung betrifft das Gebiet des chemischen Pflanzenschutzes, insbesondere die Verwendung spezieller Tenside als Penetrationsförderer für agrochemische Wirkstoffe sowie agrochemische Mittel enthaltend diese Tenside.

Stoffe, welche die Penetration von agrochemischen Wirkstoffen durch die Kutikula der Pflanze erhöhen, sogenannte Penetrationsförderer, sind wertvolle Hilfsstoffe im chemischen Pflanzenschutz. Obgleich bereits verschiedene Stoffklassen als Penetrationsförderer bekannt sind (siehe z.B. WO 2005/104844), besteht unter verschiedenen Gesichtspunkten ein weiterer Bedarf an Verbindungen mit solchen Eigenschaften.

Aufgabe der Erfindung ist es daher, weitere Stoffe mit penetrationsfördernden Eigenschaften für agrochemische Wirkstoffe bereitzustellen.

Tenside aus der Gruppe der Polyalkylenoxid-dialkanoate und deren Verwendung im Pflanzenschutz sind beispielsweise aus WO 01/97614, WO 01/97615 und WO 02/49432 bekannt.

Es wurde nun gefunden, dass sich spezielle Tenside aus dieser Gruppe als Penetrationsförderer für agrochemische Wirkstoffe eignen.

Gegenstand der Erfindung ist daher die Verwendung von Polyalkylenoxidderivaten der Formel (I),

R^{a}-(CO)ₐ-[O]_{c}-A-(CO)_{b}-R^{b} (I)

zur Förderung der Penetration von agrochemischen Wirkstoffen in Pflanzen, wobei die Symbole und Indizes in der Formel (I) folgende Bedeutungen haben:
- R^{a}: ist ein C₈-C₃₀-Kohlenwasserstoff-Rest, vorzugsweise C₈-C₃₀-Alkyl, C₈₋₃₀- Alkenyl oder C₈-C₃₀-Alkinyl;
- R^{b}: ist ein C₈-C₃₀-Kohlenwasserstoff-Rest, wie C₈-C₃₀-Alkyl, C₈-C₃₀-Alkenyl, C₈- C₃₀-Alkinyl;
- a: ist 0 oder 1;
- b: ist 0 oder 1;
- c: ist 0 oder 1 und
- A: ist eine oder mehrere Alkylenoxideinheiten.

Kohlenwasserstoffrest bedeutet bevorzugt einen aliphatischen, gesättigten oder vorgesättigten Kohlenwasserstoffrest, besonders bevorzugt Alkyl, Alkenyl und Alkinyl, insbesondere Alkyl, mit vorzugsweise 4 bis 24, besonders bevorzugt 8 bis 18 C-Atomen, der gegebenenfalls durch Halogen, vorzugsweise F und Cl, oder (C₁-C₄)-Alkoxygruppen substituiert ist.

Unter dem Begriff Alkylenoxideinheiten werden vorzugsweise Einheiten von C₂-C₁₀-Alkylenoxiden, wie Ethylenoxid, Propylenoxid, Butylenoxid oder Hexylenoxid verstanden, wobei die Einheiten innerhalb des Tensids gleich oder voneinander verschieden sein können. Besonders bevorzugt sind Einheiten von Ethylenoxid und Propylenoxid, ganz besonders bevorzugt ist Ethylenoxid.

Enthält das Tensid (I) unterschiedliche Alkylenoxideinheiten so können diese alternierend, blockweise oder statistisch angeordnet sein.

Bevorzugt enthalten die Verbindungen der Formel Aₙ Alkylenoxideinheiten, wobei n ≥ 1 und ≤ 600, vorzugsweise ≥ 3 und ≤ 400, besonders bevorzugt ≥ 5 und ≤ 100, ganz besonders bevorzugt ≥ 5 und ≤ 80, ist.

Vorzugsweise enthält das Tensid der Formel (I) Alkylenoxideinheiten A der Formel (II),

-(EO)ₓ (RO)y (EO)_{z}- (II)

worin
- EO: eine Ethylenoxideinheit bedeutet,
- RO: eine Einheit - CHR^{x}-CHR^{y}-O - bedeutet, wobei R^{x}, R^{y} unabhängig voneinander H oder (C₁-C₄)Alkyl bedeuten, vorzugsweise H, Methyl, Ethyl, insbesondere RO eine Propylenoxideinheit (PO) bedeutet,
- x: eine ganze Zahl von 0 bis 600, vorzugsweise 1 bis 50 bedeutet,
- y: eine ganze Zahl von 0 bis 600 bedeutet,
- z: eine ganze Zahl von 0 bis 600 bedeutet,
wobei die Summe (x+y+z) ≥ 2 und ≤ 600, vorzugsweise ≥ 3 und ≤ 400, besonders bevorzugt ≥ 5 und ≤ 100, ist.

Die Abkürzungen EO und PO in Formel (II) bedeuten eine Ethylenoxideinheit bzw. eine Propylenoxideinheit, auch soweit sie an anderen Stellen der Beschreibung verwendet werden.

Bevorzugt verwendete Tenside (I) sind Tenside der nachfolgenden Formeln I-1) bis I-3),
- I-1): R^{a}-O-A-R^{b}, worin R^{a}, A und R^{b} wie in Formel (I) definiert sind, vorzugsweise (C₈-C₃₀)Alkyl-O-[(EO)ₓ(PO)_{y}]-(C₈-C₃₀)Alkyl,
- I-2): R^{a}-CO-O-A-R^{b}, worin R^{a}, A und R^{b} wie in Formel (I) definiert sind vorzugsweise (C₈-C₃₀)Alkyl-CO-O-[(EO)ₓ (PO)_{y}]-(C₈-C₃₀)Alkyl,
- I-3): R^{a}-CO-O-A-CO-R^{b}, worin R^{a}, A und R^{b} wie in Formel (I) definiert sind, vorzugsweise (C₈-C₃₀)Alkyl-CO-O-[(EO)ₓ (PO)_{y}]-CO-(C₈-C₃₀)Alkyl,
worin
- x: eine ganze Zahl von 0 bis 600,
- y: eine ganze Zahl von 0 bis 600, und
- x + y: eine ganze Zahl ≥1 und ≤600, vorzugsweise von 3 und 400, besonders bevorzugt 5-100, ganz besonders bevorzugt von 5 - 80, ist.

Besonders bevorzugt verwendet werden Tenside
1-11) (C₁₀-C₂₄) Alkyl-O-[(EO)ₓ(PO)_{y}]-(C₁₀-C₂₄)Alkyl
1-22) (C₉-C₂₃)Alkyl-CO-O-[(EO)ₓ(PO)_{y}]-(C₁₀-C₂₄)Alkyl
1-33) (C₉-C₂₃)Alkyl-CO-O-[(EO)ₓ(PO)_{y}]-CO(C₉-C₂₃)Alkyl,
worin
- x: eine ganze Zahl von 0 bis 600,
- y: eine ganze Zahl von 0 bis 600, und
- x + y: eine ganze Zahl ≥1 und ≤600, vorzugsweise von 3 - 400, besonders bevorzugt von 5-100, ganz besonders bevorzugt von 5 - 80, ist,

Tenside der Formel (1) sind literaturbekannt, z. B. aus McCutcheon's, Emulsifiers&Detergents 1994, Vol. 1: North American Edition und Vol. 2, International Edition; McCutcheon Division, Glen Rock NJ. Die hierin genannten Tenside sind durch Bezugnahme Bestandteil dieser Beschreibung. Außerdem sind Tenside der Formel (I) auch kommerziell erhältlich, z. B. unter den Markennamen Cithrol® von der Firma Croda oder durch bekannte Synthesereaktionen dem Fachmann leicht zugänglich.

Besonders bevorzugte Polyalkylenoxidderivate der Formel (I) sind solche der Formel (III). 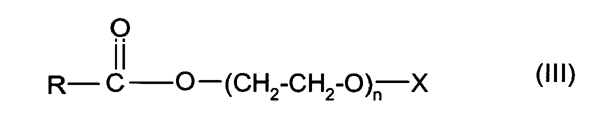 worin die Symbole und Indizes folgende Bedeutungen haben:
- R: ist ein Oleyl-, Stearyl- oder Laurylrest;
- n: ist eine natürliche Zahl von 2 bis 20 und
- X: ist H oder -C(O)R.

Solche Verbindungen sind beispielsweise aus der Cithrol®-Reihe der Firma Croda kommerziell erhältlich.

Bevorzugte Verbindungen der Formel (III) sind z.B.:

| R | X | Molekulargewicht | Handelsname (Cithrol^{®}-) |
|---|---|---|---|
| Lauryl | H | 400 | 4 ML |
| Lauryl | Lauryl | 400 | 4 DL |
| Stearyl | H | 400 | 4 MS |
| Stearyl | H | 600 | 6 MS |
| Stearyl | H | 1000 | 10 MS |
| Stearyl | Stearyl | 400 | 4 DS |
| Olelyl | H | 200 | 2 MO |
| Oleyl | H | 400 | 4 MO |
| Oleyl | H | 600 | 6 MO |
| Oleyl | H | 1000 | 10 MO |
| Oleyl | Oleyl | 400 | 4 DO |
| Oleyl | Oleyl | 600 | 6 DOX |

Die handelsüblichen Produkte sind im allgemeinen Mischungen von Verbindungen der Formel (1), insbesondere mit unterschiedlichen Gehalten an Alkylenoxidgruppen A, so dass der Wert n üblicherweise einen Mittelwert darstellt.

Beispiele für Tenside der Formel (1) sind in der nachfolgenden Tabellen 1 bis 3 aufgeführt:

**Tabelle 1: Tenside der Formel I-1**

| R^{a}-O-A-R^{b} | | | |
|---|---|---|---|
| Bsp.-Nr. | R^{a} | A | R^{b} |
| 1 | C₈H₁₇ | (EO)₅ | C₈H₁₇ |
| 2 | C₈H₁₇ | (EO)₈ | C₈H₁₇ |
| 3 | C₈H₁₇ | (EO)₉ | C₈H₁₇ |
| 4 | C₈H₁₇ | (EO)₁₀ | C₈H₁₇ |
| 5 | C₈H₁₇ | (EO)₁₅ | C₈H₁₇ |
| 6 | C₈H₁₇ | (EO)₂₀ | C₈H₁₇ |
| 7 | C₈H₁₇ | (EO)₂₅ | C₈H₁₇ |
| 8 | C₈H₁₇ | (EO)₃₀ | C₈H₁₇ |
| 9 | C₈H₁₇ | (EO)₄₀ | C₈H₁₇ |
| 10 | C₈H₁₇ | (EO)₅₀ | C₈H₁₇ |
| 11 | C₁₀H₂₁ | (EO)₅ | C₁₀H₂₁ |
| 12 | C₁₀H₂₁ | (EO)₈ | C₁₀H₂₁ |
| 13 | C₁₀H₂₁ | (EO)₉ | C₁₀H₂₁ |
| 14 | C₁₀H₂₁ | (EO)₁₀ | C₁₀H₂₁ |
| 15 | C₁₀H₂₁ | (EO)₁₅ | C₁₀H₂₁ |
| 16 | C₁₀H₂₁ | (EO)₂₀ | C₁₀H₂₁ |
| 17 | C₁₀H₂₁ | (EO)₃₀ | C₁₀H₂₁ |
| 18 | C₁₀H₂₁ | (EO)₅₀ | C₁₀H₂₁ |
| 19 | C₁₀H₂₁ | (EO)₇₅ | C₁₀H₂₁ |
| 20 | C₁₀H₂₁ | (E0)₁₀₀ | C₁₀H₂₁ |
| 21 | C₁₂H₂₅ | (EO)₅ | C₁₂H₂₅ |
| 22 | C₁₂H₂₅ | (EO)₈ | C₁₂H₂₅ |
| 23 | C₁₂H₂₅ | (EO)₉ | C₁₂H₂₅ |
| 24 | C₁₂H₂₅ | (EO)₁₀ | C₁₂H₂₅ |
| 25 | C₁₂H₂₅ | (EO)₁₅ | C₁₂H₂₅ |
| 26 | C₁₂H₂₅ | (EO)₃₀ | C₁₂H₂₅ |
| 27 | C₁₂H₂₅ | (EO)₅₀ | C₁₂H₂₅ |
| 28 | C₁₄H₂₉ | (EO)₁₅ | C₁₄H₂₉ |
| 29 | C₁₄H₂₉ | (EO)₃₀ | C₁₄H₂₉ |
| 30 | C₁₄H₂₉ | (EO)₆₀ | C₁₄H₂₉ |
| 31 | C₁₄H₂₉ | (EO)₁₀₀ | C₁₄H₂₉ |
| 32 | C₁₆H₃₃ | (EO)5 | C₁₆H₃₃ |
| 33 | C₁₆H₃₃ | (EO)₈ | C₁₆H₃₃ |
| 34 | C₁₆H₃₃ | (EO)₉ | C₁₆H₃₃ |
| 35 | C₁₆H₃₃ | (EO)₁₀ | C₁₆H₃₃ |
| 36 | C₁₆H₃₃ | (EO)₁₅ | C₁₆H₃₃ |
| 37 | C₁₆H₃₃ | (EO)₁₈ | C₁₆H₃₃ |
| 38 | C₁₆H₃₃ | (EO)₂₀ | C₁₆H₃₃ |
| 39 | C₁₆H₃₃ | (EO)₂₅ | C₁₆H₃₃ |
| 40 | C₁₆H₃₃ | (EO)₃₀ | C₁₆H₃₃ |
| 41 | C₁₆H₃₃ | (EO)₄₀ | C₁₆H₃₃ |
| 42 | C₁₆H₃₃ | (EO)₅₀ | C₁₆H₃₃ |
| 43 | C₁₆H₃₃ | (EO)₇₅ | C₁₆H₃₃ |
| 44 | C₁₆H₃₃ | (EO)₁₀₀ | C₁₆H₃₃ |
| 45 | C₁₈H₃₇ | (EO)₅ | C₁₈H₃₇ |
| 46 | C₁₈H₃₇ | (EO)₈ | C₁₈H₃₇ |
| 47 | C₁₈H₃₇ | (EO)₉ | C₁₈H₃₇ |
| 48 | C₁₈H₃₇ | (EO)₁₀ | C₁₈H₃₇ |
| 49 | C₁₈H₃₇ | (EO)₁₅ | C₁₈H₃₇ |
| 50 | C₁₈H₃₇ | (EO)₂₀ | C₁₈H₃₇ |
| 51 | C₁₈H₃₇ | (EO)₂₅ | C₁₈H₃₇ |
| 52 | C₁₈H₃₇ | (EO)₃₀ | C₁₈H₃₇ |
| 53 | C₁₈H₃₇ | (EO)₄₀ | C₁₈H₃₇ |
| 54 | C₁₈H₃₇ | (EO)₅₀ | C₁₈H₃₇ |
| 55 | C₁₈H₃₇ | (EO)₆₀ | C₁₈H₃₇ |
| 56 | C₁₈H₃₇ | (EO)₇₅ | C₁₈H₃₇ |
| 57 | C₁₈H₃₇ | (EO)₁₀₀ | C₁₈H₃₇ |
| 58 | C₁₈H₃₇ | (EO)₁₅₀ | C₁₈H₃₇ |
| 59 | C₁₈H₃₇ | (EO)₂₀₀ | C₁₈H₃₇ |
| 60 | C₂₂H₄₅ | (EO)₅ | C₂₂H₄₅ |
| 61 | C₂₂H₄₅ | (EO)₈ | C₂₂H₄₅ |
| 62 | C₂₂H₄₅ | (EO)₉ | C₂₂H₄₅ |
| 63 | C₂₂H₄₅ | (EO)₁₀ | C₂₂H₄₅ |
| 64 | C₂₂H₄₅ | (EO)₂₅ | C₂₂H₄₅ |
| 65 | C₂₂H₄₅ | (EO)₅₀ | C₂₂H₄₅ |
| 66 | C₂₂H₄₅ | (EO)₁₀₀ | C₂₂H₄₅ |
| 67 | C₁₈H₃₇ | (EO)₁₅(PO)₅ | C₁₈H₃₇ |
| 68 | C₁₈H₃₇ | (EO)₂₀(PO)₅ | C₁₈H₃₇ |
| 69 | C₁₈H₃₇ | (EO)₁₅(PO)₁₀ | C₁₈H₃₇ |
| 70 | C₁₈H₃₇ | (EO)₁₅(PO)₁₅ | C₁₈H₃₇ |
| 71 | C₁₈H₃₇ | (EO)₃₀(PO)₁₀ | C₁₈H₃₇ |
| 72 | C₁₈H₃₅ | (EO)₂₅ | C₁₈H₃₅ |
| 73 | C₁₈H₃₅ | (EO)₅₀ | C₁₈H₃₅ |
| 74 | C₁₈H₃₃ | (EO)₅ | C₁₈H₃₃ |
| 75 | C₁₈H₃₃ | (EO)₈ | C₁₈H₃₃ |
| 76 | C₁₈H₃₃ | (EO)₉ | C₁₈H₃₃ |
| 77 | C₁₈H₃₃ | (EO)₁₀ | C₁₈H₃₃ |
| 78 | C₁₈H₃₃ | (EO)₂₅ | C₁₈H₃₃ |
| 79 | C₁₈H₃₃ | (EO)₅₀ | C₁₈H₃₃ |
| 80 | C₁₈H₃₇ | (EO)₂₀ | C₈H₁₇ |
| 81 | C₁₈H₃₇ | (EO)₂₅ | C₈H₁₇ |
| 82 | C₁₈H₃₇ | (EO)₅₀ | C₈H₁₇ |

**Tabelle 2: Tenside der Formel I-2**

| R^{a}-CO-O-A-R^{b} | | | |
|---|---|---|---|
| Bsp.-Nr. | R^{a} | A | R^{b} |
| 1 | C₉H₁₉ | (EO)₁₀ | C₈H₁₇ |
| 2 | C₉H₁₉ | (EO)₁₅ | C₈H₁₇ |
| 3 | C₉H₁₉ | (EO)₂₀ | C₈H₁₇ |
| 4 | C₉H₁₉ | (EO)₃₀ | C₈H₁₇ |
| 5 | C₉H₁₉ | (EO)₅₀ | C₈H₁₇ |
| 6 | C₉H₁₉ | (EO)₅ | C₁₂H₂₅ |
| 7 | C₉H₁₉ | (EO)₈ | C₁₂H₂₅ |
| 8 | C₉H₁₉ | (EO)₉ | C₁₂H₂₅ |
| 9 | C₉H₁₉ | (EO)₁₀ | C₁₂H₂₅ |
| 10 | C₉H₁₉ | (EO)₃₀ | C₁₂H₂₅ |
| 11 | C₉H₂₃ | (EO)₁₅ | C₈H₁₇ |
| 12 | C₉H₂₃ | (EO)₃₀ | C₈H₁₇ |
| 13 | C₉H₂₃ | (EO)₆₀ | C₈H₁₇ |
| 14 | C₉H₂₃ | (EO)₂₀ | C₁₂H₂₅ |
| 15 | C₉H₂₃ | (EO)₃₀ | C₁₄H₂₉ |
| 16 | C₁₃H₂₇ | (EO)₃₀ | C₈H₁₇ |
| 17 | C₁₃H₂₇ | (EO)₃₀ | C₁₄H₂₉ |
| 18 | C₁₃H₂₇ | (EO)₂₅ | C₁₂H₂₅ |
| 19 | C₁₅H₃₁ | (EO)₂₀ | C₁₆H₃₃ |
| 20 | C₁₅H₃₁ | (EO)₃₀ | C₁₆H₃₃ |
| 21 | C₁₇H₃₅ | (EO)₅ | C₁₆H₃₃ |
| 22 | C₁₇H₃₅ | (EO)₈ | C₁₆H₃₃ |
| 23 | C₁₇H₃₅ | (EO)₉ | C₁₆H₃₃ |
| 24 | C₁₇H₃₅ | (EO)₁₀ | C₁₆H₃₃ |
| 25 | C₁₇H₃₅ | (EO)₁₅ | C₁₆H₃₃ |
| 26 | C₁₇H₃₅ | (EO)₂₀ | C₁₆H₃₃ |
| 27 | C₁₇H₃₅ | (EO)₅ | C₁₆H₃₃ |
| 28 | C₁₇H₃₅ | (EO)₉ | C₁₆H₃₃ |
| 29 | C₁₇H₃₅ | (EO)₁₀ | C₁₆H₃₃ |
| 30 | C₁₇H₃₅ | (EO)₃₀ | C₁₆H₃₃ |
| 31 | C₁₇H₃₅ | (EO)₄₀(PO)₁₀ | C₁₆H₃₃ |
| 32 | C₁₇H₃₅ | (EO)₄₀(PO)₂₀ | C₁₆H₃₃ |

**Tabelle 3: Tenside der Formel I-3**

| R^{a}-CO-O-A-CO-R^{b} | | | |
|---|---|---|---|
| Bsp.-Nr. | R^{a} | A | R^{b} |
| 1 | C₉H₁₉ | (EO)₁₀ | C₉H₁₉ |
| 2 | C₉H₁₉ | (EO)₁₅ | C₉H₁₉ |
| 3 | C₉H₁₉ | (EO)₂₀ | C₉H₁₉ |
| 4 | C₉H₁₉ | (EO)₄₀ | C₉H₁₉ |
| 5 | C₉H₂₃ | (EO)₅ | C₉H₂₃ |
| 6 | C₉H₂₃ | (EO)₈ | C₉H₂₃ |
| 7 | C₉H₂₃ | (EO)₉ | C₉H₂₃ |
| 8 | C₉H₂₃ | (EO)₁₀ | C₉H₂₃ |
| 9 | C₉H₂₃ | (EO)₂₀ | C₉H₂₃ |
| 10 | C₉H₂₃ | (EO)₃₀ | C₉H₂₃ |
| 11 | C₉H₂₃ | (EO)₄₀ | C₉H₂₃ |
| 12 | C₉H₂₃ | (EO)₅₀ | C₉H₂₃ |
| 13 | C₉H₂₃ | (EO)₅ | C₉H₂₃ |
| 14 | C₁₃H₂₇ | (EO)₈ | C₁₃H₂₇ |
| 15 | C₁₃H₂₇ | (EO)₉ | C₁₃H₂₇ |
| 16 | C₁₃H₂₇ | (EO)₁₀ | C₁₃H₂₇ |
| 17 | C₁₃H₂₇ | (EO)₂₀ | C₁₃H₂₇ |
| 18 | C₁₃H₂₇ | (EO)₃₀ | C₁₃H₂₇ |
| 19 | C₁₃H₂₇ | (EO)₄₀ | C₁₃H₂₇ |
| 20 | C₁₃H₂₇ | (EO)₅₀ | C₁₃H₂₇ |
| 21 | C₁₃H₂₇ | (EO)₆₀ | C₁₃H₂₇ |
| 22 | C₁₅H₃₁ | (EO)₅ | C₁₅H₃₁ |
| 23 | C₁₅H₃₁ | (EO)₈ | C₁₅H₃₁ |
| 24 | C₁₅H₃₁ | (EO)₉ | C₁₅H₃₁ |
| 25 | C₁₅H₃₁ | (EO)₁₅ | C₁₅H₃₁ |
| 26 | C₁₅H₃₁ | (EO)₂₀ | C₁₅H₃₁ |
| 27 | C₁₅H₃₁ | (EO)₃₀ | C₁₅H₃₁ |
| 28 | C₁₅H₃₁ | (EO)₄₀ | C₁₅H₃₁ |
| 29 | C₁₅H₃₁ | (EO)₅₀ | C₁₅H₃₁ |
| 30 | C₁₅H₃₁ | (EO)₆₀ | C₁₅H₃₁ |
| 31 | C₁₅H₃₁ | (EO)₁₀₀ | C₁₅H₃₁ |
| 32 | C₁₇H₃₅ | (EO)₅ | C₁₇H₃₅ |
| 33 | C₁₇H₃₅ | (EO)₈ | C₁₇H₃₅ |
| 34 | C₁₇H₃₅ | (EO)₉ | C₁₇H₃₅ |
| 35 | C₁₇H₃₅ | (EO)₁₅ | C₁₇H₃₅ |
| 36 | C₁₇H₃₅ | (EO)₂₀ | C₁₇H₃₅ |
| 37 | C₁₇H₃₅ | (EO)₃₀ | C₁₇H₃₅ |
| 38 | C₁₇H₃₅ | (EO)₄₀ | C₁₇H₃₅ |
| 39 | C₁₇H₃₅ | (EO)₅₀ | C₁₇H₃₅ |
| 40 | C₁₇H₃₅ | (EO)₆₀ | C₁₇H₃₅ |
| 41 | C₁₇H₃₅ | (EO)₇₀ | C₁₇H₃₅ |
| 42 | C₁₇H₃₅ | (EO)₁₀₀ | C₁₇H₃₅ |
| 43 | C₁₇H₃₃ | (EO)₂₀ | C₁₇H₃₃ |
| 44 | C₁₇H₃₁ | (EO)₃ | C₁₇H₃₁ |
| 45 | C₁₇H₃₁ | (EO)₅ | C₁₇H₃₁ |
| 46 | C₁₇H₃₁ | (EO)₈ | C₁₇H₃₁ |
| 47 | C₁₇H₃₁ | (EO)₉ | C₁₇H₃₁ |
| 48 | C₁₇H₃₁ | (EO)₁₀ | C₁₇H₃₁ |
| 49 | C₁₇H₃₁ | (EO)₁₂ | C₁₇H₃₁ |
| 50 | C₁₇H₃₁ | (EO)₂₀ | C₁₇H₃₁ |
| 51 | C₁₇H₃₁ | (EO)₂₀ | C₁₃H₂₇ |

Unter dem Begriff Penetrationsförderer werden Verbindungen verstanden, welche die Aufnahme von agrochemischen Wirkstoffen durch die Kutikula einer Pflanze in die Pflanze fördern, d.h. die Aufnahmegeschwindigkeit beschleunigen und/oder die aufgenommene Menge des Wirkstoffs in die Pflanze erhöhen.

Da der Wirkmechanismus der Tenside (I) als Penetrationsförderer grundsätzlich unabhängig von der Art des eingesetzten agrochemischen Wirkstoffs ist, kommen alle Wirkstoffe in Frage, deren biologische Wirksamkeit durch erhöhtes Eindringen in eine Kultur- oder Schadpflanze erhöht werden kann.

Vorzugsweise genannt seien Fungizide, Bakterizide, Insektizide, Akarizide, Nematizide, Molluskizide, Rodentizide, Repellents, Herbizide, Pflanzenwuchsregulatoren, Safener und Pflanzennährstoffe, die über systemische Eigenschaften verfügen, sowie als Kombinationspartner in Frage kommende Kontaktmittel. Im folgenden beinhaltet der Begriff Fungizide sowohl Fungizide wie auch Bakterizide und der Begriff Insektizide sowohl Insektizide wie auch Akarizide, Nematizide, Molluskizide, Rodentizide und Repellents - soweit aus dem Zusammenhang nichts anderes hervorgeht.

Weiterhin bevorzugt sind systemische Wirkstoffe, d.h. solche die von der Pflanze durch die Blätter oder über die Wurzeln aufgenommen und im Saftstom, dem Transportsystem oder Pflanze, weitergeleitet werden. Besonders bevorzugt sind solche Wirkstoffe, die einen Log P wert von ≤4 aufweisen (bestimmt gemäß EEC-Directive 79/831 Annex V. A8 durch HPLC, Gradientenmethode, Acetronitril / 0,1 % wässrige Phosphorsäure), insbesondere solche mit einem Log P Wert von ≤4 und ≥ 0,1.

Beispiele für einzelne Wirkstoffe sind:

### Herbizide

Beispiele für Herbizide sind z.B. ALS-Inhibitoren (Acetolactat-Synthetase-Inhibitoren) oder Herbizide aus der Gruppe der Carbamate, Thiocarbamate, Halogenacetanilide, substituierte Phenoxy-, Naphthoxy- und Phenoxyphenoxycarbonsäure-Derivate sowie Heteroaryloxy-phenoxyalkancarbonsäure-Derivate, wie Chinolyloxy-, Chinoxalyl-oxy-, Pyridyloxy-, Benzoxazolyloxy- und Benzthiazolyloxyphenoxyalkancarbonsäureester, Cyclo-hexandionabkömmlinge, Imidazolinone, Phosphor-haltige Herbizide, z.B. vom Glufosinate-Typ oder vom Glyphosate-Typ, Pyrimidinyloxy-pyridincarbonsäure-Derivate, Pyrimidyloxy-benzoesäure-Derivate, Triazolopyrimidin-sulfonamid-Derivate sowie S-(N-Aryl-N-alkylcarbamoylmethyl)-dithiophosphorsäureester.
A) Bevorzugte ALS-Inhibitoren entstammen aus der Reihe der Sulfonylharnstoffe und/oder ihrer Salze, z.B. Pyrimidin- oder Triazinylaminocarbonyl-[benzol-, pyridin-, pyrazol-, thiophen- und (alkylsulfonyl)-alkylamino-]-sulfamide. Solche geeigneten Sulfonylharnstoffe sind beispielsweise
   A1) Phenyl- und Benzylsulfonylharnstoffe und verwandte Verbindungen, z.B. 1-(2-Chlorphenylsulfonyl)-3-(4-methoxy-6-methyl-1,3,5-triazin-2-yl)-harnstoff (Chlorsulfuron),
      1-(2-Ethoxycarbonylphenylsulfonyl)-3-(4-chlor-6-methoxypyrimidin-2-yl)-hamstoff (Chlorimuron-ethyl),
      1-(2-Methoxyphenylsulfonyl)-3-(4-methoxy-6-methyl-1,3,5-triazin-2-yl)-hamstoff (Metsulfuron-methyl),
      1-(2-Chlorethoxyphenylsulfonyl)-3-(4-methoxy-6-methyl-1,3,5-triazin-2-yl)-hamtoff (Triasulfuron),
      1-(2-Methoxycarbonylphenylsulfonyl)-3-(4,6-dimethylpyrimidin-2-yl)-hamstoff (Sulfumeturon-methyl),
      1-(2-Methoxycarbonylphenylsulfonyl)-3-(4-methoxy-6-methyl-1,3,5-triazin-2-yl)-3-methylhamstoff (Tribenuron-methyl),
      1-(2-Methoxycarbonylbenzylsulfonyl)-3-(4,6-dimethoxypyrimidin-2-yl)-harnstoff (Bensulfuron-methyl),
      1-(2-Methoxycarbonylphenylsulfonyl)-3-(4,6-bis-(difluormethoxy)pyrimidin-2-yl)-harnstoff, (Primisulfuron-methyl),
      3-(4-Ethyl-6-methoxy-1,3,5-triazin-2-yl)-1-(2,3-dihydro-1,1-dioxo-2-methylbenzo-[b]thiophen-7-sulfonyl)-harnstoff (EP-A 0 079 683),
      3-(4-Ethoxy-6-ethyl-1,3, 5-triazin-2-yl)-1-(2,3-dihydro-1,1-dioxo-2-methylbenzo[b]-thiophen-7-sulfonyl)hamstoff (EP-A 0 079 683), 3-(4-Methoxy-6-methyl-1,3,5-triazin-2-yl)-1-(2-methoxycarbonyl-5-jod-phenylsulfonyl)-harnstoff (lodosulfuron-methyl und dessen Natriumsalz, WO 92/13845), DPX-66037, Triflusulfuron-methyl (s. Brighton Crop Prot. Conf. - Weeds - 1995, S. 853),
      CGA-277476, (s. Brighton Crop Prot. Conf. - Weeds - 1995, S. 79),
      Methyl-2-[3-(4,6-dimethoxypyrimidin-2-yl)ureidosulfonyl]-4-methansulfon-amido-methyl-benzoat (Mesosulfuron-methyl, WO 95/10507),
      N,N-Dimethyl-2-[3-(4,6-dimethoxypyrimidin-2-yl)ureidosulfonyl]-4-formylaminobenzamid (Foramsulfuron, WO 95/01344);
   A2) Thienylsulfonylharnstoffe, z.B.
      1-(2-Methoxycarbonylthiophen-3-yl)-3-(4-methoxy-6-methyl-1,3,5-triazin-2-yl)harnstoff (Thifensulfuron-methyl);
   A3) Pyrazolylsulfonylharnstoffe, z.B.
      1-(4-Ethoxycarbonyl-1-methylpyrazol-5-yl-sulfonyl)-3-(4,6-dimethoxypyrimidin-2-yl)harnstoff (Pyrazosulfuron-methyl);
      Methyl-3-chlor-5-(4,6-dimethoxypyrimidin-2-ylcarbamoylsulfamoyl)-1-methyl-pyrazol-4-carboxylat (EP-A 0 282 613);
      5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference 'Weeds' 1991, Vol. 1, S. 45 ff.),
      DPX-A8947, Azimsulfuron, (s. Brighton Crop Prot. Conf. 'Weeds' 1995, S. 65);
   A4) Sulfondiamid-Derivate, z.B.
      3-(4,6-Dimethoxypyrimidin-2-yl)-1-(N-methyl-N-methylsulfonylaminosulfonyl)-hamstoff (Amidosulfuron) und dessen Strukturanaloge (EP-A 0 131 258 und Z. Pfl. Krankh. Pfl. Schutz, Sonderheft XII, 489-497 (1990));
   A5) Pyridylsulfonylharnstoffe, z.B.
      1-(3-N,N-Dimethylaminocarbonylpyridin-2-ylsulfonyl)-3-(4,6-dimethoxypyrimidin-2-yl)-hamstoff (Nicosulfuron),
      1-(3-Ethylsulfonylpyridin-2-ylsulfonyl)-3-(-(4,6-dimethoxypyrimidin-2-yl)-harnstoff (Rimsulfuron),
      2-[3-(4,6-Dimethoxypyrimidin-2-yl)-ureidosulfonyl]-6-trifluormethyl-3-pyridincarbonsäuremethylester, Natriumsalz (DPX-KE 459, Flupyrsulfuron, s. Brighton Crop Prot. Conf. Weeds, 1995, S. 49),
      Pyridylsulfonylharnstoffe, wie sie z.B. in DE-A 40 00 503 und DE-A 40 30 577 beschrieben sind, vorzugsweise solche der Formel 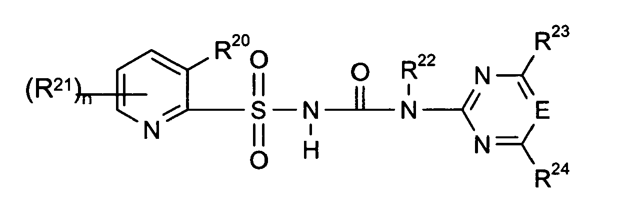 worin
      - E: CH oder N, vorzugsweise CH,
      - R²⁰: Iod oder NR²⁵R²⁶ ,
      - R²¹: Wasserstoff, Halogen, Cyano, (C₁-C₃)-Alkyl, (C₁-C₃)-Alkoxy, (C₁-C₃)- Halogenalkyl, (C₁-C₃)-Halogenalkoxy, (C₁-C₃)-Alkylthlo, (C₁-C₃)-Alkoxy-(C₁- C₃)-alkyl, (C₁-C₃)-Alkoxy-carbonyl, Mono- oder Di-((C₁-C₃)-alkyl)-amino, (C₁- C₃)-Alkylsulfinyl oder -sulfonyl, SO₂-NR^{x}R^{y} oder CO-NR^{x}R^{y}, insbesondere Wasserstoff,
      - R^{x} R^{y}: unabhängig voneinander Wasserstoff, (C₁-C₃)-Alkyl, (C₁-C₃)-Alkenyl, (C₁-C₃)- Alkinyl oder zusammen -(CH₂)₄-, -(CH₂)₅- oder -(CH₂)₂-O-(CH₂)₂-,
      - n: 0,1,2 oder 3, vorzugsweise 0 oder 1 ist,
      - R²²: Wasserstoff oder CH₃,
      - R²³: Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
      - R²⁴: (C₁-C₂)-Alkyl, (C₁-C₂)-Halogenalkoxy, vorzugsweise OCHF₂, oder (C₁-C₂)- Alkoxy,
      - R²⁵: (C₁-C₄)-Alkyl,
      - R²⁶: (C₁-C₄)-Alkylsulfonyl oder
      - R²⁵ und R²⁶: gemeinsam eine Kette der Formel -(CH₂)₃SO₂- oder -(CH₂)₄SO₂- bedeuten, z.B. 3-(4,6-Dimethoxypyrimiden-2-yl)-1-(3-N-methylsulfonyl-N-methylaminopyridin-2-yl)-sulfonylharnstoff, oder deren Salze;
   A6) Alkoxyphenoxysulfonylharnstoffe, wie sie z.B. in EP-A 0 342 569 beschrieben sind, vorzugsweise solche der Formel 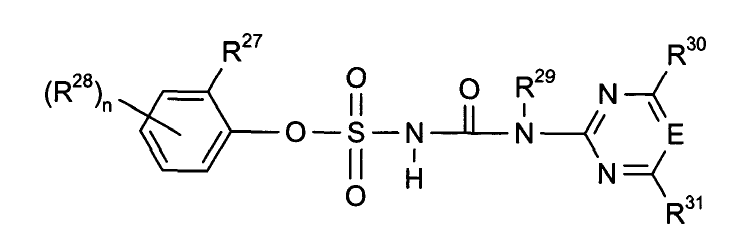 worin
      - E: CH oder N, vorzugsweise CH,
      - R²⁷: Ethoxy, Propoxy oder Isopropoxy,
      - R²⁸: Halogen, NO₂, CF₃, CN, (C₁-C₄)-Alkyl, (C₁-C₄)-Alkoxy, (C₁-C₄)-Alkylthio oder (C₁-C₃)-Alkoxy-carbonyl, vorzugsweise in 6-Position am Phenylring,
      - n: 0, 1, 2 oder 3, vorzugsweise 0 oder 1,
      - R²⁹: Wasserstoff, (C₁-C₄)-Alkyl oder (C₃-C₄)-Alkenyl,
      - R³⁰, R³¹: unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonylhamstoff, oder deren Salze;
   A7) Imidazolylsulfonylharnstoffe, z.B.
      MON 37500, Sulfosulfuron (s. Brighton Crop Prot. Conf. 'Weeds', 1995, S: 57), und andere verwandte Sulfonylhamstoff-Derivate und Mischungen daraus;
      Typische Vertreter dieser Wirkstoffe sind unter anderem die nachfolgend aufgeführten Verbindungen: Amidosulfuron, Azimsulfuron, Bensulfuron-Methyl, Chlorimuron-Ethyl, Chlorsulfuron, Cinosulfuron, Cyclosulfamuron, Ethametsulfuron-Methyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, lodosulfuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 2000)).
B) Herbizide vom Typ der Phenoxyphenoxy- und Heteroaryloxyphenoxycarbonsäure-Derivate, wie
   B1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl),
      2-(4-(4-Brom-2-chlorphenoxy)-phenoxy)-propionsäuremethylester (DE-A 26 01 548),
      2-(4-(4-Brom-2-fluorphenoxy)-phenoxy)-propionsäuremethylester (US-A 4,808,750),
      2-(4-(2-Chlor-4-trifluormethylphenoxy)-phenoxy)-propionsäuremethylester (DE-A 24 33 067),
      2-(4-(2-Fluor-4-trifluormethylphenoxy)-phenoxy)-propionsäuremethylester (US-A 4,808,750),
      2-(4-(2,4-Dichlorbenzyl)-phenoxy)-propionsäuremethylester (DE-A 24 17 487), 4-(4-(4-Trifluormethylphenoxy)-phenoxy)-pent-2-en-säureethylester,
      2-(4-(4-Trifluormethylphenoxy)-phenoxy)-propionsäuremethylester (DE-A 24 33 067);
   B2) "Einkernige" Heteroaryloxyphenoxy-alkancarbonsäure-Derivate, z.B.
      2-(4-(3,5-Dichlorpyridyl-2-oxy)-phenoxy)-propionsäureethylester (EP-A 0 002 925),
      2-(4-(3,5-Dichlorpyridyl-2-oxy)-phenoxy)-propionsäurepropargylester (EP-A 0 003 114),
      2-(4-(3-Chlor-5-trifluormethyl-2-pyridyloxy)-phenoxy)-propionsäuremethylester (EP-A 0 003 890),
      2-(4-(3-Chlor-5-trifluormethyl-2-pyridyloxy)-phenoxy)-propionsäureethylester (EP-A 0 003 890),
      2-(4-(5-Chlor-3-fluor-2-pyridyloxy)-phenoxy)-propionsäurepropargylester (EP-A 0 191 736),
      2-(4-(5-Trifluormethyl-2-pyridyloxy)-phenoxy)-propionsäurebutylester (Fluazifop-butyl);
   B3) "Zweikernige" Heteroaryloxyphenoxy-alkancarbonsäure-Derivate, z.B. 2-(4-(6-Chlor-2-chinoxalyloxy)-phenoxy)-propionsäuremethylester und -ethylester (Quizalofopmethyl und Quizalofopethyl),
      2-(4-(6-Fluor-2-chinoxalyloxy)-phenoxy)-propionsäuremethylester (s. J. Pest. Sci. Vol. 10, 61 (1985)),
      2-(4-(6-Chlor-2-chinoxalyloxy)-phenoxy)-propionsäure-2-isopropylidenaminooxy-ethylester (Propaquizafop),
      2-(4-(6-Chlorbenzoxazol-2-yl-oxy)-phenoxy)-propionsäureethylester (Fenoxapropethyl), dessen D(+) Isomer (Fenoxaprop-P-ethyl) und 2-(4-(6-Chlorbenzthiazol-2-yloxy)-phenoxy)-propionsäureethylester (DE-A 26 40 730),
      2-(4-(6-Chlorchinoxalyloxy)-phenoxy)-propionsäure-tetrahydro-2-furylmethylester (EP-A 0 323 727);
C) Chloracetanilide, z.B.
   N-Methoxymethyl-2,6-diethyl-chloracetanilid (Alachlor),
   N-(3-Methoxyprop-2-yl)-2-methyl-6-ethyl-chloracetanilid (Metolachlor),
   N-(3-Methyl-1,2,4-oxadiazol-5-yl-methyl)-chloressigsäure-2,6-dimethylanilid,
   N-(2,6-Dimethylphenyl)-N-(1-pyrazolylmethyl)-chloressigsäureamid (Metazachlor);
D) Thiocarbamate, z.B.
   S-Ethyl-N,N-dipropylthiocarbamat (EPTC),
   S-Ethyl-N,N-diisobutylthiocarbamat (Butylate);
E) Cyclohexandionoxime, z.B.
   3-(1-Allyloxyiminobutyl)-4-hydroxy-6,6-dimethyl-2-oxocyclohex-3-encarbonsäuremethylester, (Alloxydim),
   2-(1-Ethoxyiminobutyl)-5-(2-ethylthiopropyl)-3-hydroxy-cyclohex-2-en-1-on (Sethoxydim),
   2-(1-Ethoxyiminobutyl)-5-(2-phenylthiopropyl)-3-hydroxy-cyclohex-2-en-1-on (Cloproxydim),
   2-(1-(3-Chlorallyloxy)-iminobutyl)-5-(2-ethylthiopropyl)-3-hydroxy-cyclohex-2-en-1-on,
   2-(1-(3-Chlorallyloxy)-iminopropyl)-5-(2-ethylthiopropyl)-3-hydroxy-cyclohex-2-en-1 - on (Clethodim),
   2-(1-Ethoxyiminobutyl)-3-hydroxy-5-(thian-3-yl)-cyclohex-2-en-on (Cycloxydim),
   2-(1-Ethoxyiminopropyl)-5-(2,4,6-trimethylphenyl)-3-hydroxy-cyclohex-2-en-1-on (Tralkoxydim);
F) Imidazolinone, z.B.
   2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
   5-Ethyl-2-(4-isopropyl-4-methyl-5-oxo-2-imidazolin-2-yl)-pyridin-3-carbonsäure (Imazethapyr),
   2-(4-Isopropyl-4-methyl-5-oxo-2-imidazolin-2-yl)-chinolin-3-carbonsäure (Imazaquin),
   2-(4-Isopropyl-4-methyl-5-oxo-2-imidazolin-2-yl)-pyridin-3-carbonsäure (Imazapyr),
   5-Methyl-2-(4-isopropyl-4-methyl-5-oxo-2-imidazolin-2-yl)-pyridin-3-carbonsäure (Imazethamethapyr);
G) Triazolopyrimidinsulfonamid-Derivate, z.B.
   N-(2,6-Difluorphenyl)-7-methyl-1,2,4-triazolo[1,5-c]pyrimidin-2-sulfonamid (Flumetsulam),
   N-(2,6-Dichlor-3-methylphenyl)-5,7-dimethoxy-1,2,4-triazolo[1,5-c]pyrimidin-2-sulfonamid,
   N-(2,6-Difluorphenyl)-7-fluor-5-methoxy-1,2,4-triazolo[1,5-c]-pyrimidin-2-sulfonamid,
   N-(2,6-Dichlor-3-methylphenyl)-7-chlor-5-methoxy-1,2,4-triazolo[1,5-c]-pyrimidin-2-sulfonamid,
   N-(2-Chlor-6-methoxycarbonyl)-5,7-dimethyl-1,2,4-triazolo[1,5-c]-pyrimidin-2-sulfonamid (EP-A 0 343 752, US-A 4,988,812);
H) Benzoylcyclohexandione, z.B.
   2-(2-Chlor-4-methylsulfonylbenzoyl)-cyclohexan-1,3-dion (SC-0051, EP-A 0 137 963), 2-(2-Nitrobenzoyl)-4,4-dimethyl-cyclohexan-1,3-dion (EP-A 0 274 634),
   2-(2-Nitro-3-methylsulfonylbenzoyl)-4,4-dimethylcyclohexan-1,3-dion (WO 91/13548);
I) Pyrimidinyloxy-pyridincarbonsäure- bzw. Pyrimidinyloxybenzoesäure-Derivate, z.B.
   3-(4,6-Dimethoxypyrimidin-2-yl)-oxy-pyridin-2-carbonsäurebenzylester (EP-A 0 249 707),
   3-(4,6-Dimethoxypyrimidin-2-yl)-oxy-pyridin-2-carbonsäuremethylester (EP-A 0 249 707),
   2,6-Bis[(4,6-dimethoxypyrimidin-2-yl)-oxy]-benzoesäure (EP-A 0 321 846),
   2,6-Bis[(4,6-dimethoxypyrimidin-2-yl)-oxy]-benzoesäure-1-(ethoxycarbonyl-oxyethyl)-ester (EP-A 0 472 113);
J) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
K) Alkylazine, z.B. wie beschrieben in WO-A 97/08156, WO-A-97/31904, DE-A-19826670, WO-A-98/15536, WO-A-98/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (K) 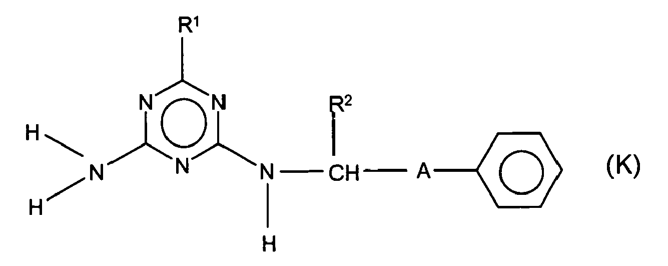 worin
   - R¹: (C₁-C₄)-Alkyl oder (C₁-C₄)-Haloalkyl;
   - R²: (C₁-C₄)-Alkyl, (C₃-C₆)-Cycloalkyl oder (C₃-C₆)-Cycloalkyl-(C₁-C₄)-Alkyl und
   - A: -CH₂-, -CH₂-CH₂-, -CH₂-CH₂-CH₂-, -O-, -CH₂-CH₂-O-, -CH₂-CH₂-CH₂-O-
   bedeuten, besonders bevorzugt solche der Formel K1-K7 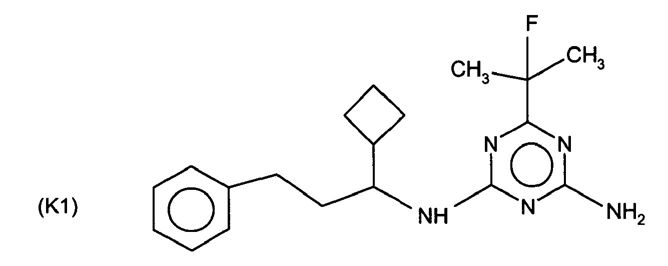 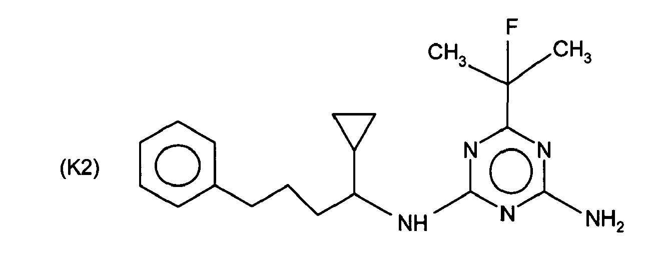 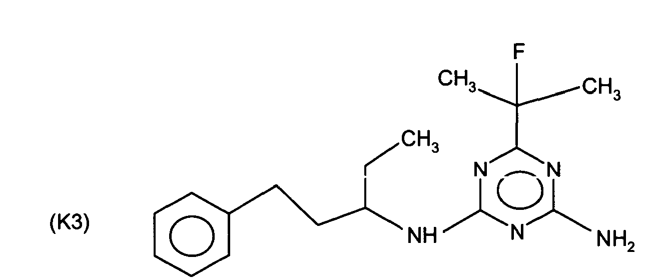 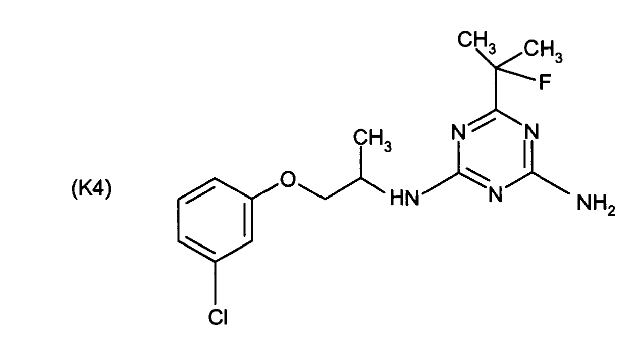 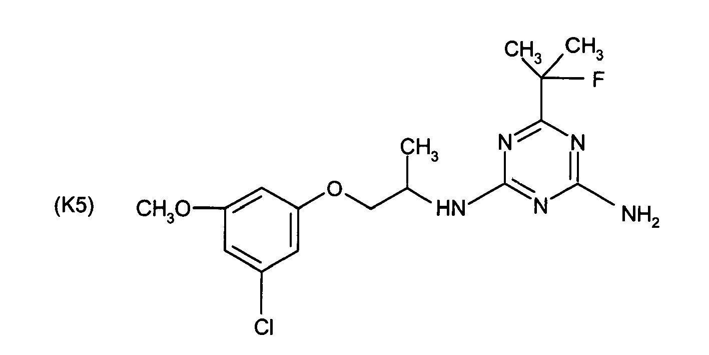 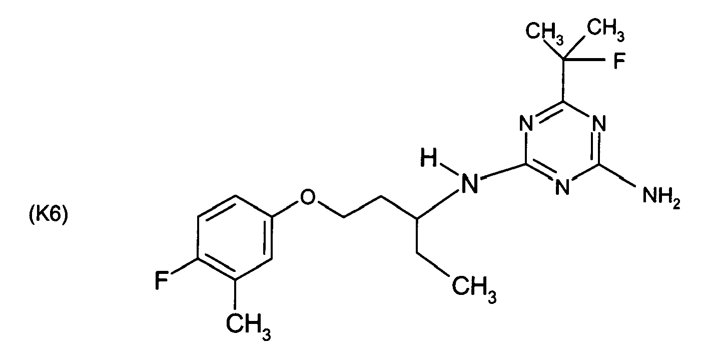 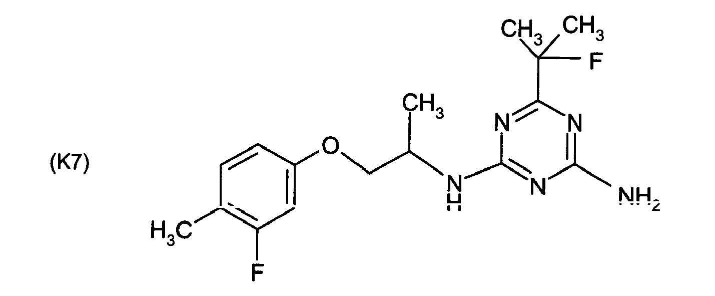
L) phosphorhaltige Herbizide, z.B. eine oder mehrere Verbindungen der Formel (IV) oder deren Derivate wie Salze, 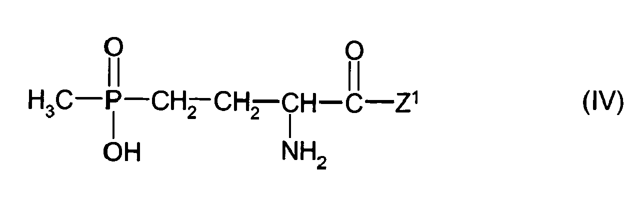 worin
   Z¹ einen Rest der Formel -OM, -NHCH(CH₃)CONHCH(CH₃)CO₂M oder -NHCH(CH₃)CONHCH[CH₂CH(CH₃)₂]CO₂M und
   M = H oder ein Salz bildendes Kation bedeuten,
   und/oder eine oder mehrere Verbindungen der Formel (V) oder deren Derivate wie Salze, 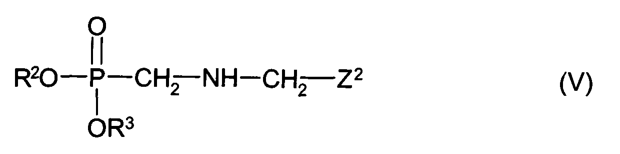 worin
   Z² einen Rest der Formel CN oder CO₂R¹ bedeutet, in dem R¹ = Q oder ein Salz bildendes Kation ist und dabei Q = H, Alkyl, Alkenyl, Alkoxyalkyl oder C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, und
   R²,R³ jeweils unabhängig voneinander H, Alkyl, C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, oder Biphenyl oder ein Salz bildendes Kation bedeuten.
   Beispiele für Wirkstoffe der Formel (IV) und (V) sind folgende:
   ◆ Glufosinate und dessen Ammoniumsalz in racemischer Form, d.h. 2-Amino-4-[hydroxy(methyl)phosphinoyl]-butansäure bzw. dessen Ammoniumsalz,
   ◆ das L-Enantiomer von Glufosinate und dessen Ammoniumsalz,
   ◆ Bilanafos/Bialaphos, d.h. L-2-Amino-4-[hydroxy(methyl)phosphinoyl]-butanoyl-L-alaninyl-L-alanin und dessen Natriumsalz
   ◆ Glyphosate.
M) Carbamate, z.B. Asulam, Carbetamide, Chloropham und Propham;
N) Benzofurane, z.B. Benfuresate und Ethofumesate;
O) Phytohormone;
P) Auxine und Auxinanaloga, z.B. 4-Indol-3-buttersäure, Indol-3-essigsäure, 1-Naphthylessigsäure, 2-(1-Naphthyl)acetamid und 2-Naphthyloxyessigsäure;
Q) Zytokinine, z.B. Cythokinin, Kinetin und 6-Benzylaminopurin;
R) Gibberelline, z.B. Gibberillinsäure, Gibberillin A4 und A7;
S) Absissinsäure- und deren Derivate;
T) Ethylenvorläufer, z.B. Ethephon;
U) Herbizide aus der Gruppe der Fettsäuresynthetase-Inhibitoren;
V) Harnstoffe, z.B. Chlorotoluron, Dimefuron, Diuron, Fluometuron, Isoproturon, Isouron, Karbutilate, Linuron, Methabenzthiazuron, Metobenzuron, Metoxuron, Monolinuron, Neburon, Siduron und Tebuthiuron und
W) Metamitron.

Die agrochemischen Wirkstoffe können auch Safener sein. Beispiele hierfür sind
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (Mefenpyr-diethyl, Verbindung C1-1) und verwandte Verbindungen, wie sie in der internationalen Anmeldung WO 91/07874 (PCT/EP 90102020) beschrieben sind;
b) Derivate der Dichlorphenylpyrazolcarbonsäure, vorzugsweise Verbindungen wie 1-(2,4-Dichlorphenyl)-5-methyl-pyrazol-3-carbonsäureethylester (Verbindung C1-2), 1-(2,4-Dichlorphenyl)-5-isopropyl-pyrazol-3-carbonsäureethylester (Verbindung C1-3), 1-(2,4-Dichlorphenyl)-5-(1,1-dimethyl-ethyl)-pyrazol-3-carbonsäureethylester (Verbindung C1-4), 1-(2,4-Dichlorphenyl)-5-phenyl pyrazol-3-carbonsäureethylester (Verbindung C1-5) und verwandte Verbindungen, wie sie in EP-A-0 333 131 und EP-A-0 269 806 beschrieben sind;
c) Verbindungen vom Typ der Triazolcarbonsäuren, vorzugsweise Verbindungen wie 1-(2,4-Dichlorphenyl)-5-trichlormethyl-(1 H)-1,2,4-triazol-3-carbonsäureethylester (Verbindung C1 -6, Fenchlorazol-ethyl) und verwandte Verbindungen (siehe EP-A-0 174 562 und EP-A-0 346 620);
d) Verbindungen vom Typ der Dichlorbenzyl-2-isoxazolin-3-carbonsäure, Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung C1 -7) oder 5-Phenyl-2-isoxazolin-3-carbonsäureethylester (Verbindung C1-8) und verwandte Verbindungen wie sie in der internationalen Patentanmeldung WO 91/08202 (PCT/EP 90/01966) beschrieben sind;
e) Verbindungen vom Typ der 8-Chinolinoxyessigsäure, vorzugsweise Verbindungen wie (5-Chlor-8-chinolinoxy)-essigsäure-(1 -methyl-hex-1 -yl)-ester (Cloquintocet -mexyl, C2-1), (5-Chlor-8-chinolinoxy)-essigsäure-(1,3-dimethyl-but-1-yl)-ester (C2-2), (5-Chlor-8-chinolinoxy)-essigsäure-4-allyl-oxy-butylester (C2-3), (5-Chlor-8-chinolinoxy)-essigsäure-1-allyl-oxy-prop-2-ylester (C2-4), (5-Chlor-8-chinolinoxy)-essigsäureethylester (C2-5), (5-Chlor-8-chinolinoxy)-essigsäuremethylester (C2-6), (5-Chlor-8-chinolinoxy)-essigsäureallylester (C2-7), (5-Chlor-8-chinolinoxy)-essigsäure-2-(2-prpyliden-iminoxy)-1-ethylester (C2-8), (5-Chlor-8-chinolinoxy)-essigsäure-2-oxo-prop-1 -ylester (C2-9) und verwandte Verbindungen wie sie in EP-A-0 086 750, EP-A-0 094 349 und EP-A-0 191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallyester, (5-Chlor-8-chinolinoxy)-malonsäuremethylethylester und verwandte Verbindungen wie sie in der deutschen Patentanmeldung EP-A-0 582 198 beschrieben und vorgeschlagen worden sind;
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba);
h) Verbindungen vom Typ der 5,5-Diphenyl-2-isoxazolin-3-carbonsäure, vorzugsweise 5,5-Diphenyl-2-isoxazolin-3-carbonsäureethylester (Isoxadifenethyl, C3-1);
i) Verbindungen, die als Safener z.B. für Reis bekannt sind wie Fenclorim (= 4,6-Dichlor-2-phenylpyrimidin, Pesticide Manual, 12. Auflage, 1999, S. 386/387), Dimepiperate (= Piperidin-1 -thiocarbonsäure-S-1 -methyl-1 -phenylethylester, Pesticide Manual, 12. Auflage, 1999, S. 302/303), Daimuron (= 1 -(1 -Methyl- 1-phenylethyl)-3-p-tolyl-harnstoff, Pesticide Manual, 12. Auflage, 1999, S. 247), Cumyluron (= 3-(2-Chlorphenylmethyl)-1 -(1 -methyl-1-phenyl-ethyl)- harnstoff, JP-A-60/087254), Methoxyphenon (= 3,3'-Dimethyl-4-methoxy- benzophenon, CSB (= 1-Brom-4-(chlormethylsulfonyl)-benzol, CAS-Reg. Nr. 54091-06-4). Die genannten Verbindungen sind außerdem zumindest teilweise in der EP-A-0 640 587 beschrieben, auf die hiermit zu Offenbarungszwecken Bezug genommen wird.
j) Eine weitere wichtige Gruppe von als Safenern und Antidoten geeigneten Verbindungen ist aus der WO 95107897 bekannt.

Die agrochemischen Wirkstoffe können auch Wachstumsregulatoren sein. Beispiele hierfür sind Cyclanilide und Thidiazuron.

### Die agrochemischen Wirkstoffe können auch Fungizide sein, beispielsweise

Inhibitoren der Nucleinsäure Synthese, insbesondere
Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure

Inhibitoren der Mitose und Zellteilung, insbesondere
Benomyl, Carbendazim, Diethofencarb, Fuberidazole, Pencycuron, Thiabendazol, Thiophanat-methyl, Zoxamid

Inhibitoren der Atmungskette Komplex I, insbesondere
Diflumetorim

Inhibitoren der Atmungskette Komplex II, insbesondere
Boscalid, Carboxin, Fenfuram, Flutolanil, Furametpyr, Mepronil, Oxycarboxin, Penthiopyrad, Thifluzamid

Inhibitoren der Atmungskette Komplex I II, insbesondere
Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin, Trifloxystrobin

Entkoppler, insbesondere
Dinocap, Fluazinam

Inhibitoren der ATP Produktion, insbesondere
Fentinacetat, Fentinchlorid, Fentinhydroxid, Silthiofam

Inhibitoren der Aminosäure- und Proteinbiosynthese, insbesondere
Andoprim, Blasticidin-S, Cyprodinil, Kasugamycin, Kasugamycinhydrochlorid Hydrat, Mepanipyrim, Pyrimethanil

Inhibitoren der Signal-Transduktion, insbesondere
Fenpiclonil, Fludioxonil, Quinoxyfen

Inhibitoren der Fett- und Membran Synthese, insbesondere Chlozolinat, Iprodion, Procymidon, Vinclozolin
Ampropylfos, Kalium-Ampropylfos, Edifenphos, Iprobenfos (lBP), Isoprothiolan, Pyrazophos
Tolclofos-methyl, Biphenyl
lodocarb, Propamocarb, Propamocarb hydrochlorid

Inhibitoren der Ergosterol Biosynthese, insbesondere
Fenhexamid,
Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol, Aldimorph, Dodemorph, Dodemorphacetat, Fenpropimorph, Tridemorph, Fenpropidin, Spiroxamin,
Naftifin, Pyributicarb, Terbinafin

Inhibitoren der Zellwand Synthese, insbesondere
Benthiavalicarb, Bialaphos, Dimethomorph, Flumorph, Iprovalicarb, Polyoxins, Polyoxorim, Validamycin A

Inhibitoren der Melanin Biosynthese, insbesondere
Capropamid, Diclocymet, Fenoxanil, Phtalid, Pyroquilon, Tricyclazol

Resistenzinduktoren, insbesondere
Acibenzolar-S-methyl, Probenazol, Tiadinil

Multisite, insbesondere
Captafol, Captan, Chlorothalonil, Kupfersalze wie: Kupferhydroxid, Kupfemaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram

Fungizide mit unbekannten Mechanismus, insbesondere
Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin -Natrium, Proquinazid, Pyrrolnitrin, Quintozen, Tecloftalam, Tecnazen, Triazoxid, Trichlamid, Zarilamid und 2,3,5,6-Tetrachlor-4-(methylsulfonyl)-pyridin, N-(4-Chlor 2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1H-inden-1-yl)-1H-imidazole-5-carboxylat, 3,4,5-Trichlor-2,6-pyridindicarbonitril, Methyl 2-[[[cyclopropyl[(4-methoxyphenyl) imino]methyl]thio]methyl]-.alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl]oxy]-3-methoxyphenyl]ethyl]- 3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1 R)-1,2,2-trimethylpropyl][1,2,4]triazolo[1,5-a]pyrimidin-7-amin, 5-Chlor-N-[(1 R)-1,2-dimethylpropyl]-6-(2,4,6-trifluorophenyl) [1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlomicotinamid, 2-Butoxy-6-iod-3-propyl-benzopyranon-4-on, N-{(Z)-[(cyclopropylmethoxy) imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1 Fluor-2-phenylethyl)oxy] phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1 H-pyrazol-4-carboxamid, N-(6-Methoxy-3-pyridinyl)-cyclopropan carboxamid, 1-[(4-Methoxyphenoxy)methyl]-2,2-dimethylpropyl-1 H-imidazol-1- carbonsäure, O-[1-[(4-Methoxyphenoxy)methyl]-2,2-dimethylpropyl]-1 H-imidazol- 1- carbothioic acid, 2-(2-{[6-(3-Chlor-2-methylphenoxy)-5-fluorpyrimidin-4-yl]oxy}phenyl)-2-(methoxyimino)-N-methylacetamid

Die agrochemischen Wirkstoffe können auch Bakterizide sein, beispielsweise Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Die agrochemischen Wirkstoffe können auch Insektizide / Akarizide und/oder Nematizide sein, beispielsweise

Acetylcholinesterase (AChE) Inhibitoren
Carbamate,
zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metamsodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate Organophosphate,
zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, lprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/ -ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion

Natrium-Kanal-Modulatoren / Spannungsabhängige Natrium-Kanal-Blocker Pyrethroide,
zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1 R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda- Cyhalothrin, Metofluthrin, Permethrin (cis-, trans-), Phenothrin (1 R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1 R- isomer), Tralomethrin, Transfluthrin, ZXI 8901, Pyrethrins (pyrethrum)
DDT
Oxadiazine,
zum Beispiel Indoxacarb
Semicarbazon,
zum Beispiel Metaflumizon (BAS3201)

Acetylcholin-Rezeptor-Agonisten/-Antagonisten
Chloronicotinyle,
zum Beispiel Acetamiprid, Clothianidin, Dinotefuran, Imidacloprid, Nitenpyram, Nithiazine, Thiacloprid, Thiamethoxam
Nicotine, Bensultap, Cartap

Acetylcholin-Rezeptor-Modulatoren
Spinosyne,
zum Beispiel Spinosad

GABA-gesteuerte Chlorid-Kanal-Antagonisten
Organochlorine,
zum Beispiel Camphechlor, Chlordane, Endosulfan, Gamma-HCH, HCH, Heptachlor, Lindane, Methoxychlor
Fiprole,
zum Beispiel Acetoprole, Ethiprole, Fipronil, Pyrafluprole, Pyriprole,
Vaniliprole

Chlorid-Kanal-Aktivatoren
Mectine,
zum Beispiel Abamectin, Emamectin, Emamectin-benzoate, Ivermectin,
Lepimectin, Milbemycin

Juvenilhormon-Mimetika,
zum Beispiel Diofenolan, Epofenonane, Fenoxycarb, Hydroprene, Kinoprene, Methoprene, Pyriproxifen, Triprene

Ecdysonagonisten/disruptoren
Diacylhydrazine,
zum Beispiel Chromafenozide, Halofenozide, Methoxyfenozide, Tebufenozide

Inhibitoren der Chitinbiosynthese
Benzoylharnstoffe,
zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
Buprofezin
Cyromazine

Inhibitoren der oxidativen Phosphorylierung, ATP-Disruptoren
Diafenthiuron
Organozinnverbindungen,
zum Beispiel Azocyclotin, Cyhexatin, Fenbutatin-oxide

Entkoppler der oxidativen Phoshorylierung durch Unterbrechung des H-Protongradienten
Pyrrole,
zum Beispiel Chlorfenapyr
Dinitrophenole,
zum Beispiel Binapacyrl, Dinobuton, Dinocap, DNOC

Site-I-Elektronentransportinhibitoren
METI's,
zum Beispiel Fenazaquin, Fenpyroximate, Pyrimidifen, Pyridaben, Tebufenpyrad, Tolfenpyrad
Hydramethylnon
Dicofol

Site-II-Elektronentransportinhibitoren
Rotenone

Site-III-Elektronentransportinhibitoren
Acequinocyl, Fluacrypyrim

Mikrobielle Disruptoren der Insektendarmmembran
Bacillus thuringiensis-Stämme

Inhibitoren der Fettsynthese
Tetronsäuren,
zum Beispiel Spirodiclofen, Spiromesifen
Tetramsäuren,
zum Beispiel Spirotetramat
Carboxamide,
zum Beispiel Flonicamid
Oktopaminerge Agonisten,
zum Beispiel Amitraz

Inhibitoren der Magnesium-stimulierten ATPase,
Propargite
Nereistoxin-Analoge,
zum Beispiel Thiocyclam hydrogen oxalate, Thiosultap-sodium

Agonisten des Ryanodin-Rezeptors,
Benzoesäuredicarboxamide,
zum Beispiel Flubendiamid
Anthranilamide,
zum Beispiel DPX E2Y45 (3-bromo-N-{4-chloro-2-methyl-6-[(methylamino)carbonyl]phenyl}-1-(3-chloropyridin-2-yl)-1 H-pyrazole-5-carboxamide)

Biologika, Hormone oder Pheromone
Azadirachtin, Bacillus spec., Beauveria spec., Codlemone, Metarrhizium spec., Paecilomyces spec., Thuringiensin, Verticillium spec.

Wirkstoffe mit unbekannten oder nicht spezifischen Wirkmechanismen Fraßhemmer,
zum Beispiel Cryolite, Flonicamid, Pymetrozine
Milbenwachstumsinhibitoren,
zum Beispiel Clofentezine, Etoxazole, Hexythiazox Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin.

Die Erfindung betrifft weiterhin agrochemische Mittel, enthaltend mindestens einen agrochemischen Wirkstoff (A) und mindestens ein Tensid (B) der Formel (1). Die erfindungsgemäßen agrochemischen Mittel zeigen eine ausgezeichnete Wirkung und in einer bevorzugten Ausführungsform überadditive Effekte. Aufgrund der verbesserten Kontrolle der Schadorganismen durch die erfindungsgemäßen agrochemischen Mittel wird es möglich, die Aufwandmenge zu senken und/oder die Sicherheitsmarge zu erhöhen. Beides ist sowohl ökonomisch als auch ökologisch sinnvoll. Die Wahl der von den Komponenten (A) + B) einzusetzenden Mengen und das Verhältnis der Komponenten (A): (B) sind dabei von einer ganzen Reihe von Faktoren abhängig.

Zu den in Frage kommenden Formulierungstypen gehören alle Formulierungen, die auf Pflanzen oder deren Vermehrungsgut ausgebracht werden. Die zu deren Herstellung verwendeten Verfahren sind dem Fachmann allgemein geläufig und beispielsweise beschrieben in Winnacker-Küchler, "Chemische Technologie" Band 7, C. Hanser Verlag München, 4. Aufl., 1986; J.W. van Valkenburg, ,,Pesticide Formulations", Marcel Dekker N.Y., 1973, K. Martens, "Spray Drying Handbook", 3rd Ed. 1979, G. Goodwin Ltd., London, oder Mollet, Grubenmann, "Formulierungstechnik", Wiley-VCH-Verlag, Weinheim, 2000.

Beispiele für Formulierungstypen sind die im "Manual on development and use of FAO and WHO specifications for pesticides" (FAO and WHO, 2002, appendix E) erwähnten (jeweils Verwendung der GCPF-Formulierungskodes mit englischer Abkürzung und Bezeichnung): AL Any other liquid; AP Any other powder; CF Capsule Suspension for Seed Treatment; CG Encapsulated granule; CL Contact liquid or gel; CP Contact powder; CS Capsule suspension; DC Dispersible concentrate; DP Dustable powder; DS Powder for dry seed treatment; EC Emulsifiable concentrate; ED Electrochargeable liquid; EG Emulsifiable Granule; EO Emulsion, water in oil; EP emulsifiable powder; ES Emulsion for seed treatment; EW Emulsion, oil in water; FG Fine granule; FS Flowable concentrate for seed treatment; GF Gel for Seed Treatment; GG Macrogranule; GL Emulsifiable gel; GP Flo-dust; GR Granule; GS Grease; GW Water soluble gel; HN Hot fogging concentrate; KK Combi-pack solid/liquid; KL Combi-pack liquid/liquid; KN Cold fogging concentrate; KP Combi-pack solid/solid; LA Lacquer; LS Solution for seed treatment; ME Microemulsion; MG Microgranule; OD oil dispersion; OF Oil miscible flowable concentrate/oil miscible suspension; OL Oil miscible liquid; OP Oil dispersible powder; PA Paste; PC Gel or paste concentrate; PO Pour-on; PR Plant rodlet; PT Pellet; SA Spot-on; SC suspension concentrate; SD suspension concentrate for direct application; SE Suspo-emulsion; SG Water soluble granule; SL Soluble concentrate; SO Spreading oil; SP Water soluble powder; SS Water soluble powder for seed treatment; ST Water soluble tablet; SU Ultra-low volume (ULV) suspension; TB Tablet; TC Technical material; TK Technical concentrate; UL Ultra-low volume (ULV) liquid; WG Water dispersible granules; WP Wettable powder; WS Water dispersible powder for slurry seed treatment; WT Water dispersible tablet; XX Others.

Bevorzugt sind flüssige Formulierungstypen. Hierzu gehören die Formulierungstypen DC (GCPF-Formulierungskode für dispergierbares Konzentrat); EC (GCPF-Formulierungskode für Emulsionskonzentrat); EW (GCPF-Formulierungskode für Ölin-Wasser-Emulsion); ES (GCPF-Formulierungskode für Emulsionsbeize); FS (GCPF-Formulierungskode für Mehrphasenkonzentrat zur Saatgutbehandlung); EO (GCPF-Formulierungskode für Wasser in Öl Emulsion); ME (GCPF-Formulierungskode für Mikroemulsion); SE (GCPF-Formulierungskode für Suspoemulsion); SL (GCPF-Formulierungskode für wasserlösliches Konzentrat); CS (GCPF-Formulierungskode für Kapselsuspension) und AL (GCPF-Formulierungskode für gebrauchsfertige Flüssigformulierung, sonstige Flüssigkeiten zur unverdünnten Anwendung).

Besonders bevorzugt sind Emulsionskonzentrate (Formulierungstyp EC).

Als Zusatzstoffe, die in den erfindungsgemäßen, vorzugsweise flüssige Formulierungen enthalten sein können, kommen alle üblichen Formulierhilfsmittel in Frage, wie organische Solventien, Entschäumer, Emulgatoren, Dispergiermittel, Konservierungsmittel, Säuren und Basen, Farbstoffe, Füllstoffe und auch Wasser.

Als Entschäumer kommen übliche, in Formulierungen von agrochemischen Wirkstoffen vorhandene Entschäumer in Frage. Beispielhaft genannt seien Silikonöle, Dispersionen von Silikonölen, Magnesiumstearat, Phosphin- und Phosphonsäuren, insbesondere Fluowet PL 80®.

Als organische Solventien kommen alle üblichen organischen Lösungsmittel in Betracht, welche die eingesetzten agrochemischen Wirkstoffe gut lösen. Vorzugsweise genannt seien aliphatische und aromatische, gegebenenfalls halogenierte Kohlenwasserstoffe, wie Toluol, Xylol, Solvesso®, Mineralöle, wie Testbenzin, Petroleum, Alkylbenzole und Spindelöl, weiterhin Tetrachlormethan, Chloroform, Methylenchlorid und Dichlormethan, außerdem Ester, wie Ethylacetat, Lactate ferner Lactone, wie Butyrolacton, außerdem Lactame, wie N-Methylpyrrolidon, N-Octylpyrrolidon, N-Dodecylpyrrolidon N-Octylcaprolactam und N-Methylcaprolactam, γ-Butyrolacton, Dimethylformamid sowie Tributylphosphat.

Als Emulgatoren kommen übliche, in Formulierungen von agrochemischen Wirkstoffen vorhandene oberflächenative Substanzen in Frage. Beispielhaft genannt seien ethoxylierte Nonylphenole, Polyethylenglykolether von linearen Alkoholen, Endgruppen-verschlossene und nicht Endgruppen-verschlossene alkoxylierte lineare und verzweigte, gesättigte und ungesättigte Alkohole, Umsetzungsprodukte von Alkylphenolen mit Ethylenoxid und/oder Propylenoxid, Ethylenoxid- Propylenoxid-Blockcopolymere, Polyethylenglykole und Polypropylenglykole, weiterhin Fettsäureester, Endgruppen-verschlossene und nicht Endgruppen-verschlossene alkoxylierte lineare und verzweigte, gesättigte und ungesättigte Fettsäuren, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate.

Als Dispergiermittel kommen alle üblicherweise in Pflanzenschutzmitteln für diesen Zweck eingesetzten Substanzen in Betracht. Vorzugsweise ganannt seien neben den oben unter Emulgatoren geannten Beispielen natürliche und synthetische, wasserlösliche Polymere, wie Gelatine, Stärke und Cellulosederivate, insbesondere Celluloseester und Celluloseether, ferner Polyvinylalkohol, Polyvinylpyrrolidon, Polyacrylsäure, Polymethacrylsäure und Co-Polymerisate aus (Meth)acrylsäure und (Meth)acrylsäureestern, und außerdem auch mit Alkalimetallhydroxid neutralisierte Co-Polymerisate aus Methacrylsäure und Methacrylsäureester.

Als Konservierungsmittel kommen alle üblicherweise für diesen Zweck in Pflanzenbehandlungsmitteln vorhandenen Substanzen in Betracht. Als Beispiele genannt seien Preventol® und Proxel®.

Als Farbstoffe kommen alle für die Herstellung von Pflanzenschutzmitteln üblichen anorganischen oder organischen Farbstoffe in Frage. Beispielhaft genannt seien Titandioxid, Farbruß, Zinkoxid und Blaupigmente.

Als Füllstoffe kommen alle üblicherweise für diesen Zweck in Pflanzenschutzmitteln eingesetzten Substanzen in Betracht. Vorzugsweise genannt seien anorganische Partikel, wie Carbonate, Silikate und Oxide mit einer mittleren Teilchengröße von 0,005 bis 5 µm, besonders bevorzugt von 0,02 bis 2 µm. Beispielhaft erwähnt seien Siliziumdioxid, sogenannte hochdisperse Kieselsäure, Kieselgele, sowie natürliche und synthetische Silikate und Alumosilikate.

Als Verbindungen, die als Emulsions-Stabilisatoren und/oder Kristallisationsinhibitoren wirken, kommen alle üblicherweise für diesen Zweck in Pflanzenschutzmitteln eingesetzte Substanzen in Betracht.

Der Gehalt an den einzelnen Komponenten kann in den erfindungsgemäßen Formulierungen innerhalb eines größeren Bereichs variiert werden.

Die Herstellung der erfindungsgemäßen Pflanzenschutzmittel erfolgt z.B. in der Weise, dass man die Komponenten in den jeweils gewünschten Verhältnissen miteinander vermischt. Handelt es sich bei dem agrochemischen Wirkstoff um eine Festsubstanz, so setzt man diesen im allgemeinen entweder in fein gemahlener Form oder in Form einer Lösung oder Suspension in einem organischen Solvens oder Wasser ein. Ist der agrochemische Wirkstoff flüssig, so erübrigt sich häufig die Verwendung eines organischen Lösungsmittels. Es ist außerdem möglich, einen festen agrochemischen Wirkstoff in Form einer Schmelze einzusetzen.

Die Temperaturen können bei der Durchführung des Verfahrens in einem bestimmten Bereich variiert werden. Man arbeitet im allgemeinen bei Temperaturen zwischen 0°C und 80°C, vorzugsweise zwischen 10°C und 60°C.

Zur Herstellung erfindungsgemäßer Mittel geht man im Allgemeinen so vor, dass man die Polyalkylenderivate (1) mit einem oder mehreren Wirkstoffen sowie gegebenenfalls mit Zusatzstoffen vermischt. Die Reihenfolge, in der die Komponenten miteinander vermischt werden, ist beliebig.

Zur Durchführung des Verfahrens kommen übliche Geräte in Betracht, die zur Herstelung von agrochemischen Formulierungen eingesetzt werden.

Als Applikationsformen können alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stängel, Stamm, Blatt), wie beispielsweise Stamminjektion bei Bäumen oder Stängelbandagen bei perennierenden Pflanzen, und eine Reihe spezieller indirekter Applikationsverfahren.

Die jeweilige flächen- und/oder objektbezogene Aufwandmenge der Pflanzenschutzmittel unterschiedlichster Formulierungstypen zur Bekämpfung der genannten Schadorganismen variiert sehr stark. Im Allgemeinen werden hierfür die, dem Fachmann als gebräuchlich für das jeweilige Einsatzgebiet bekannten Applikationsmedien in den gebräuchlichen Mengen eingesetzt; wie beispielsweise von mehreren hundert Liter Wasser pro Hektar bei Standard-Spritzverfahren über wenige Liter Öl pro Hektar bei der ,Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.% bis 99 Gew.%, besonders bevorzugt von 0,1 Gew.% bis 90 Gew.%.

Die erfindungsgemäßen agrochemischen Formulierungen können z.B. in den für Flüssigpräparate üblichen Zubereitungsformen entweder als solche oder nach vorherigem Verdünnen mit Wasser ausgebracht werden, also z.B. als Emulsionen, Suspensionen oder Lösungen. Die Anwendung erfolgt dabei nach üblichen Methoden, also z.B. durch Verspritzen, Gießen oder Injizieren.

Die Aufwandmenge an den erfindungsgemäßen agrochemischen Formulierungen kann innerhalb eines größeren Bereiches variiert werden. Sie richtet sich nach den jeweiligen agrochemischen Wirkstoffen und nach deren Gehalt in den Formulierungen.

Weiterhin Gegenstand der Erfindung ist ein Verfahren zur Förderung der Penetration agrochemischer Wirkstoffe in Pflanzen, wobei man den agrochemischen Wirkstoff gleichzeitig oder sequentiell mit einem oder mehreren Polyalkylenoxidderivaten der Formel (I) auf die Pflanze aufbringt.

Die Pflanzenschutzmittel gemäß der Erfindung sind teilweise bekannt und teilweise neu.

Gegenstand der Erfindung ist auch ein Pflanzenschutzmittel, enthaltend
A) einen oder mehrere agrochemische Wirkstoffe und
B) ein oder mehrere Polyalkylenoxidderivate der Formel (I),

   R^{a}-(CO)ₐ-[O]_{c}-(A)ₙ-(CO)_{b}-R^{b} (I)

   wobei
   - n: eine natürliche Zahl von 2 bis 9, vorzugsweise 3 bis 9, besonders bevorzugt 5 bis 9, insbesondere 5 bis 8, ist
   und die übrigen Symbole und Indizes die oben angegebenen Bedeutungen und Bevorzugungen haben.

Bevorzugt in diesen Mitteln sind agrochemische Wirkstoffe aus der Gruppe der Herbizide, besonders bevorzugt der ALS-Inhibitoren, wie Sulfonylharnstoffe, insbesondere Iodosulfuron und Ethoxysulfuron, HPPDO-Inhibitoren und Hydroxybenzonitrile, wie Bromoxynil und lodoxynil.

Weiterhin Gegenstand der Erfindung sind Pflanzenschutzmittel, enthaltend
A) einen oder mehrere agrochemische Wirkstoffe aus der Gruppe der Insektizide und Fungizide,
B) ein oder mehrere Polyalkylenoxidderivate der Formel (I),

   R^{a}-(CO)ₐ-[O]_{c}-(A)ₙ-(CO)_{b}- R^{b} (I)
worin die Symbole und Indizes die oben für die Formel (I) angegebenen Bedeutungen haben.

Bevorzugte Insektizide sind solche aus der Gruppe der Chloronicotinyle, insbesondere Imidacloprid. Ein bevorzugter Fungizid ist Fluopicolid.

Die erfindungsgemäßen agrochemischen Mittel enthalten in der Regel 0,01 bis 99 Gew.-%, insbesondere 0,1 bis 95 Gew.-%, eines oder mehrerer agrochemischer Wirkstoffe (A).

In Spritzpulvern beträgt die Wirkstoffkonzentration z. B. etwa 10 bis 90 Gew.-%, der Rest zu 100 Gew.-% besteht aus üblichen Formulierungsbestandteilen und gegebenenfalls Tensiden (B). Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0.05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Die erfindungsgemäß zu verwendenden Tenside (B) werden in der Regel zusammen mit dem bzw. den agrochemischen Wirkstoffe (A) oder unmittelbar hintereinander ausgebracht, vorzugsweise in Form einer Spritzbrühe, welche die Tenside (B) und die agrochemischen Wirkstoffe (A) in wirksamen Mengen und gegebenenfalls weitere übliche Hilfsmittel enthält. Die Spritzbrühe wird bevorzugt auf Basis von Wasser und / oder einem Öl, z. B. einem hochsiedenden Kohlenwasserstoff wie Kerosin oder Paraffin hergestellt. Dabei können die erfindungsgemäßen Mittel als Tankmischung oder über eine "Fertig-Formulierung" realisiert werden.

Das Gewichtsverhältnis von agrochemischen Wirkstoffen (A) zu Tensid (B) kann in einem weiten Bereich variieren und hängt z. B. von der Wirksamkeit des agrochemischer Wirkstoff. In der Regel ist es im Bereich von 10:1 bis 1:5000, vorzugsweise 4:1 bis 1:2000, 4: 1 bis 1 : 200, 4 : 1 bis 1 : 50, 2 : 1 bis 1 : 10, 2 : 1 bis 1 : 5, 2 : 1 bis 1 : 2.

Die Aufwandmengen der agrochemischen Wirkstoffen (A) liegen im allgemeinen zwischen 10 und 2000 g AS/ha (AS = Aktivsubstanz, d. h. Aufwandmenge bezogen auf den aktiven Wirkstoff), bevorzugt zwischen 50 und 1000 g AS/ha. Die Aufwandmengen an Tensiden (B) liegen im allgemeinen zwischen 1 und 5000 g Tensid / ha, bevorzugt werden 10 und 2000g Tensid / ha, insbesondere 20 -1000 g Tensid / ha, 20 - 500 g / ha, 50 - 500 g / ha.

Die Konzentration der erfindungsgemäß zu verwendenden Tenside (B) ist in einer Spritzbrühe in der Regel von 0,05 bis 4 Gew.-%, vorzugsweise 0,1 bis 1 Gew.-%, insbesondere 0,1 bis 0,3 Gew.-% Tensid.

Weiterhin Gegenstand der Erfindung ist ein Verfahren zur Bekämpfung von Schadorganismen, vorzugsweise schädlichen Pflanzen, Tieren und Mikroorganismen, wobei
A) ein oder mehrere agrochemische Wirkstoffe und
B) ein oder mehrere Polyalkylenoxidderivate der Formel (I),

   R^{a}-(CO)ₐ-[O]_{c}-(A)ₙ-(CO)_{b}-R^{b} (I)
worin
- n: eine natürliche Zahl von 2 bis 9, vorzugsweise 3 bis 9, besonders bevorzugt 5 bis 9, insbesondere 5 bis 8, ist und die übrigen Symbole und Indizes die oben angegebenen Bedeutungen und Bevorzugungen haben,
bevorzugt in einer wirksamen Menge, auf die Schadorganismen oder deren Lebensraum, aufgebracht werden.

Im Falle von Schadpflanzen ist das Aufbringen auf die Schadpflanze, im Falle von schädlichen Tieren und Mikroorganismen das Aufbringen auf vor diesen Schadorganismen zu schützende Pflanzen bevorzugt. Verfahren zur therapeutischen Anwendung bei Mensch und Tier sind dabei ausgeschlossen.

Weiterhin Gegenstand der Erfindung ist ein Verfahren zur Bekämpfung von schädlichen Tieren, vorzugsweise schädlichen Arthropoden, wie Insekten und Spinnentieren, Helminthen und Mollusken, besonders bevorzugt schädlichen Arthropoden und Helminthen, und schädlichen Mikroorganismen, vorzugsweise Pilzen oder Bakterien, besonders bevorzugt Pilzen, wobei
A) ein oder mehrere agrochemische Wirkstoffe aus der Gruppe der Insektizide und Fungizide,
B) ein oder mehrere Polyalkylenoxidderivate der Formel (I),

   R^{a}-(CO)ₐ-[O]_{c}-(A)ₙ-(CO)_{b}-R^{b} (I)
worin die Symbole und Indizes die oben angegebenen Bedeutungen haben, bevorzugt in einer wirksamen Menge, auf die schädlichen Tiere und/oder Mikroorganismen oder deren Lebensraum, vorzugsweise auf vor diesen schädlichen Tieren und/oder Mikroorganismen zu schützende Pflanzen, aufgebracht werden. Verfahren zur therapeutischen Anwendung bei Mensch und Tier sind dabei ausgeschlossen.

Die erfindungsgemäß behandelten Pflanzen sind, soweit es den Einsatz von Herbiziden betrifft, alle Arten von Schadpflanzen, wie Unkräutern. Was den Schutz von Kulturpflanzen durch Applikation von beispielsweise Fungiziden und Insektiziden betrifft, ist die Anwendung in wirtschaftlich bedeutenden, beispielsweise auch transgenen Kulturen von Nutz- und Zierpflanzen, z.B. von Getreide, wie Weizen, Gerste, Roggen, Hafer, Hirse, Reis, Maniok und Mais, oder auch Kulturen von Erdnuss, Zuckerrübe, Baumwolle, Soja, Raps, Kartoffel, Tomate, Erbse und anderen Gemüsesorten bevorzugt.

Die Erfindung wird durch die Beispiele näher erläutert ohne sie darauf zu beschränken.

### Beispiele

### Penetrationstest

In diesem Test wurde die Penetration von Wirkstoffen durch enzymatisch isolierte Kutikeln von Apfelbaumblättern gemessen.

Verwendet wurden Blätter, die in voll entwickeltem Zustand von Apfelbäumen der Sorte Golden Delicious abgeschnitten wurden. Die Isolierung der Kutikeln erfolgte in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt wurden,
- dann Natriumazid hinzugefügt wurde und
- die so behandelten Blattscheiben bis zur Auflösung der ursprünglichen Blattstruktur und zur Ablösung der nicht zellulären Kutikula stehen gelassen wurden.

Danach wurden nur die von Spaltöffnungen und Haaren freien Kutikeln der Blattoberseiten weiter verwendet. Sie wurden mehrfach abwechselnd mit Wasser und einer Pufferlösung vom pH-Wert 7 gewaschen. Die erhaltenen sauberen Kutikel wurden schließlich auf Teflonplättchen aufgezogen und mit einem schwachen Luftstrahl geglättet und getrocknet.

Im nächsten Schritt wurden die so gewonnenen Kutikelmembranen für Membran-Transport-Untersuchungen in Diffusionszellen(= Transportkammem) aus Edelstahl eingelegt. Dazu wurden die Kutikeln mit einer Pinzette mittig auf die mit Silikonfett bestrichenen Ränder der Diffusionszellen platziert und mit einem ebenfalls gefetteten Ring verschlossen. Die Anordnung wurde so gewählt, dass die morphologische Außenseite der Kutikeln nach außen, also zur Luft, gerichtet war, während die ursprüngliche Innenseite dem Inneren der Diffusionszelle zugewandt war. Die Diffusionszellen waren mit Wasser bzw. mit einem Gemisch aus Wasser und Lösungsmittel gefüllt.

Zur Bestimmung der Penetration wurden jeweils 9 µl einer Spritzbrühe der in den Beispielen genannten Zusammensetzung auf die Außenseite einer Kutikula appliziert.

In den Spritzbrühen wurde jeweils Leitungswasser verwendet.

Nach dem Auftragen der Spritzbrühen ließ man jeweils das Wasser verdunsten, drehte dann jeweils die Kammern um und stellte sie in thermostatisierte Wannen, wobei auf die Außenseite der Kutikula Luft mit einer definierten Temperatur und Luftfeuchtigkeit geblasen wurde. Die einsetzende Penetration fand daher bei einer relativen Luftfeuchtigkeit von 60 % und einer eingestellten Temperatur von 25°C statt. Die Wirkstoffpenetration wurde mit radioaktiv markiertem Wirkstoff gemessen.

Wie anhand der in der Tabellen aufgeführten Beispiele zu erkennen ist, führt die Anwesenheit von Verbindungen der Formel (I) (hier als Beispiel Produkte aus der Cithrol®-Reihe) zu einer beträchtlichen Aufnahmesteigerung gegenüber den Formulierungen, bei denen die Verbindungen der Formel (I) nicht vorhanden sind. Bei den eingesetzten Alternativen zu Verbindungen der Formel (I) handelt es sich um Beispiele von handelsüblichen Lösungsmitteln für Formulierungen.

**Tabelle 1**

| Kutikuläre Penetration von lodosulfuron mit Polyalkylenoxidderivaten der Formel (I) (Tensid) | | |
|---|---|---|
| Iodosulfuron (0,01 g/l)/ Tensid (1,25 g/l) | | Iodosulfuron (0,005 g/l)/ Tensid (0,625 g/l) |
| Tensid | Zeit / % | Zeit / % |
| Cithrol | 6h: 2,4 | 6h: 3,0 |
| 4DL * | 24h: 6,6 | 24h: 6,4 |
| | 48h: 9,2 | 48h: 9,7 |
| Cithrol | 6h: 1,5 | 6h: 0,8 |
| 6DOX ** | 24h: 4,3 | 24h: 3,5 |
| | 48h: 7,4 | 48h: 6,6 |
| lodosulfuron ohne Tenside | 48h: 1,3 | |

| | | |
|---|---|---|
| * Cithrol 4DL: PEG 400 Dilaurat ** Cithrol 6 DOX: PEG 600 Dioleat | | |

**Tabelle 2**

| Penetration von lodosulfuron (appliziert als WG 14) mit Polyalkylenoxidderivaten der Formel (I) (Tensid) | | | |
|---|---|---|---|
| Iodosulfuron (0,05 g/l)/ Tensid (5 g/l) | | Iodosulfuron (0,02 g/l)/ Tensid (2,5 g/l) | |
| Tensid | Zeit / % | Tensid | Zeit / % |
| Cithrol | 6h: 3,3 | Cithrol | 6h: 6,8 |
| 6DOX | 24h: 14,8 | 4DL | 24h: 9,9 |
| | 48h: 25,9 | | 48h: 12,4 |
| Cithrol | 6h: 2,8 | Cithrol | 6h: 4,9 |
| 4DL | 24h: 6,0 | 6DOX | 24h: 7,3 |
| | 48h: 8,3 | | 48h: 10,4 |
| lodosulfuron ohne Tenside | 48h: 1,3 | | |

**Tabelle 3**

| Penetration von Ethoxysulfuron (appliziert als WG 14) mit Polyalkylenoxidderivaten der Formel (I) (Tensid) | | |
|---|---|---|
| Ethoxysulfuron (0,05 g/l)/ Tensid (5 g/l) | | Ethoxysulfuron (0,2 g/l)/ Tensid (2,5 g/l) |
| Tensid | Zeit/% | Zeit / % |
| Cithrol | 6h: 0,3 | 6h: 0,8 |
| 6DOX | 24h: 0,4 | 24h: 3,0 |
| | 48h: 3,3 | 48h: 11,2 |
| Cithrol | 6h: 0,5 | 6h: 1,9 |
| 4DL | 24h: 0,9 | 24h: 3,0 |
| | 48h: 2,1 | 48h: 4,8 |
| Ethoxysulfuron ohne Tensid | 48h: 0,2 | |

**Tabelle 4**

| Kutikuläre Penetration von Imidacloprid ohne und mit Cithrol Additiven^{a} | | | | |
|---|---|---|---|---|
| Formulierung/ Tensid | Imidacloprid Konzentration [g/l] | Penetration* nach 5 Stunden [%] | Penetration* nach 1 Tag [%] | Penetration* nach 2 Tagen [%] |
| Imidacloprid (Ai) (nur Wirkstoff) | 0,3 | 0,1 | 0,3 | 0,5 |
| Ai + 0,5 g/l Cithrol 2DO ** | 0,2 | 8,9 | 22,2 | 30,6 |
| Ai + 0,5 g/l Cithrol 4DL | 0,2 | 46,3 | 60,0 | 65,8 |
| Ai + 0,5 g/l Cithrol 4DO ** | 0,2 | 41,8 | 67,8 | 76,2 |

| | | | | |
|---|---|---|---|---|
| ^{a} Mittelwerte aus 5-8 Wiederholungen * bei 20°C, 60 % ** Cithrol 2DO: PEG 200 Dioleat, Cithrol 4 DO: PEG 400 Dioleat | | | | |

**Tabelle 5**

| Penetration von Tebuconazole mit Polyalkylenoxidderivaten der Formel (I) (Tensid)^{a} | | | | |
|---|---|---|---|---|
| Formulierung/ Tensid | Tebuconazole Konzentration [g/l] | Penetration* nach 5 Stunden [%] | Penetration* nach 1 Tag [%] | Penetration* nach 2 Tagen [%] |
| Tebuconazole (ai) (nur Wirkstoff) | 0,2 | 2 | 8 | 15 |
| Ai + 0,5 g/l Cithrol 4DO | 0,2 | 17,7 | 58,4 | 75,7 |
| Ai+0,5g/l Cithrol 4DL | 0,2 | 20,6 | 68,9 | 86,8 |

| | | | | |
|---|---|---|---|---|
| ^{a} Mittelwerte aus 5-8 Wiederholungen * bei 25°C, 60 % | | | | |

**Tabelle 6**

| Penetration von Fluopicolide mit Polyalkylenoxidderivaten der Formel (I)^{a} | | | |
|---|---|---|---|
| Formulierung/ Tensid | Fluopicolide Konzentration [g/l] | Penetration* nach 5 Stunden [%] | Penetration* nach 1 Tag [%] |
| Fluopicolide (Ai) (nur Wirkstoff) | 0,25 | 0,2 | 0,6 |
| Ai + 0,5 g/l Cithrol 4DO | 0,25 | 1,3 | 8,2 |
| Ai + 0,5 g/l Cithrol 4DL | 0,25 | 4,2 | 15,0 |

| | | | |
|---|---|---|---|
| ^{a} Mittelwerte aus 5-8 Wiederholungen * bei 25°C, 60 % | | | |

## Patentansprüche

1. Verwendung von Polyalkylenoxidderivaten der Formel (I),
R^{a}-(CO),-[O]_{c}-A-(CO)_{b}-R^{b} (I)
zur Förderung der Penetration von agrochemischen Wirkstoffen in Pflanzen, wobei die Symbole und Indizes in der Formel (I) folgende Bedeutungen haben:
R^{a} ist ein C₈-C₃₀-Kohlenwasserstoff-Rest, vorzugswie C₈-C₃₀-Alkyl, C₈-C₃₀- Alkenyl oder C₈-C₃₀-Alkinyl;
R^{b} ist ein C₈-C₃₀-Kohlenwasserstoff-Rest, wie C₈-C₃₀-Alkyl, C₈-C₃₀-Alkenyl, C₈- C₃₀-Alkinyl;
a ist 0 oder 1;
b ist 0 oder 1;
c ist 0 oder 1 und
A ist eine oder mehrere Alkylenoxideinheiten.

2. Verwendung gemäß Anspruch 1, wobei das Polyalkylenoxidderivat der Formel (I) Alkylenoxideinheiten A der Formel (II) enthält,
-(EO)ₓ (RO)_{y} (EO)_{z}- (II)
worin
EO eine Ethylenoxideinheit bedeutet;
RO eine Einheit - CHR^{x}-CHR^{y}-O- bedeutet, wobei R^{x}, R^{y} unabhängig voneinander H oder (C₁-C₄)Alkyl bedeuten;
x eine ganze Zahl von 0 bis 600 bedeutet;
y eine ganze Zahl von 0 bis 600 bedeutet;
z eine ganze Zahl von 0 bis 600 bedeutet;
wobei die Summe (x+y+z) ≥ 2 und ≤ 600 ist.

3. Verwendung gemäß Anspruch 1 oder 2, wobei die die Polyalkylenoxidderivate Verbindungen der nachfolgenden Formeln I-1) bis I-3) sind:
I-1) R^{a}-O-A-R^{b}, worin R^{a}, A und R^{b} wie in Formel (I) in Anspruch 1 definiert sind;
I-2) R^{a}-CO-O-A-R^{b}, worin R^{a}, A und R^{b} wie in Formel (I) in Anspruch 1 definiert sind;
I-3) R^{a}-CO-O-A-CO-R^{b}, worin R^{a}, A und R^{b} wie in Formel (I) in Anspruch 1 definiert sind;
und worin
x eine ganze Zahl von 0 bis 600;
y eine ganze Zahl von 0 bis 600 und
x + y eine ganze Zahl ≥1 und ≤600 ist.

4. Verwendung nach Anspruch 3, wobei Polyalkylenoxidderivate der Formeln (I-11), (I-22) oder (I-33) verwendet werden,
I-11) (C₁₀-C₂₄) Alkyl-O-[(EO)ₓ(PO)_{y}]-(C₁₀-C₂₄)Alkyl
I-22) (C₉-C₂₃)Alky)-CO-O-[(EO)ₓ(PO)_{y}]-(C₁₀-C₂₄)Alkyl
I-33) (C₉-C₂₃)Alkyl-CO-O-[(EO)ₓ(PO)_{y}]-CO(C₉-C₂₃)Alkyl,
worin
x eine ganze Zahl von 0 bis 600;
y eine ganze Zahl von 0 bis 600 und
x + y eine ganze Zahl ≥1 und ≤600 ist.

5. Verwendung gemäß einem oder mehreren der Ansprüche 1 bis 4, wobei die Polyalkylenoxidderivate solche der Formel (III) sind, 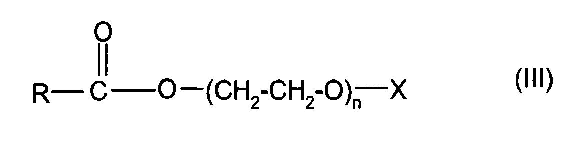 worin die Symbole und Indizes folgende Bedeutungen haben:
R ist ein Oleyl-, Stearyl- oder Laurylrest;
n ist eine natürliche Zahl von 2 bis 20 und
X ist H oder -C(O)R.

6. Verfahren zur Förderung der Penetration agrochemischer Wirkstoffe in Pflanzen, wobei man den agrochemischen Wirkstoff gleichzeitig oder sequentiell mit einem oder mehreren Polyalkylenoxidderivaten der Formel (1) gemäß Anspruch 1 auf die Pflanze aufbringt.

7. Pflanzenschutzmittel, enthaltend
A) einen oder mehrere agrochemische Wirkstoffe und
B) ein oder mehrere Polyalkylenoxidderivate der Formel (I),
R^{a}-(CO)ₐ-[O]_{c}-(A)ₙ-(CO)_{b}-R^{b} (I)
wobei
n eine natürliche Zahl von 2 bis 9 ist
und die übrigen Symbole und Indizes die in der Formel (I) in Anspruch 1 angegebenen Bedeutungen haben.

8. Pflanzenschutzmittel, enthaltend
A) einen oder mehrere agrochemische Wirkstoffe aus der Gruppe der Insektizide und Fungizide,
B) ein oder mehrere Polyalkylenoxidderivate der Formel (I),
R^{a}-(CO)ₐ-[O]_{c}-(A)ₙ-(CO)_{b}-R^{b} (I)
worin die Symbole und Indizes die für die Formel (I) in Anspruch 1 angegebenen Bedeutungen haben.

9. Verfahren zur Bekämpfung von Schadorganismen, wobei
A) ein oder mehrere agrochemische Wirkstoffe und
B) ein oder mehrere Polyalkylenoxidderivate der Formel (I),
R^{a}-(CO)ₐ-[O]_{c}-(A)ₙ-(CO)_{b}-R^{b} (I)
worin
n eine natürliche Zahl von 2 bis 9 ist
und die übrigen Symbole und Indizes die in Formel (1) in Anspruch 1 angegebenen Bedeutungen haben,
auf die Schadorganismen oder deren Lebensraum, aufgebracht werden.

10. Verfahren zur Bekämpfung von schädlichen Tieren und Mikroorganismen, wobei
A) ein oder mehrere agrochemische Wirkstoffe aus der Gruppe der Insektizide und Fungizide,
B) ein oder mehrere Polyalkylenoxidderivate der Formel (1),
R^{a}-(CO)ₐ-[O]_{c}-(A)ₙ-(CO)_{b}-R^{b} (1)
worin die Symbole und Indizes die in Formel (1) in Anspruch 1 angegebenen Bedeutungen haben,
auf die schädlichen Tiere und/oder Mikroorganismen oder deren Lebensraum aufgebracht werden.
